# EUROPEAN PATENT APPLICATION

(11) **EP 1 852 996 A2**
(43) Date of publication of application: **07.11.2007**
(21) Application number: 07251825.1
(22) Date of filing: 01.05.2007
(51) Int. Cl.: H04L 1/18

(54) **Error detection and retransmission methods and devices for communication systems**

(30) Priority: 03.05.2006 US 796885 P; 22.06.2006 US 815597 P; 27.04.2007 US 741264
(71) Applicant: INDUSTRIAL TECHNOLOGY RESEARCH INSTITUTE, Hsinchu, Taiwan 310 (CN)
(72) Inventor: Chiu, Chun-Yuan, Hsinchu, Taiwan 310 (TW); Tseng, Chin-Chieh, Hsinchu, Taiwan 310 (TW)
(74) Representative: Nicholls, Michael John

(57) **Abstract**

A method for identifying errors in a wireless communication system includes transmitting, by a transmitting device, data to a receiving device; receiving, from the receiving device, a receipt message, wherein the receipt message is in response to the data; receiving, from the receiving device, an error indicator, wherein the error indicator is associated with the data; and determining an error type based on at least one of the receipt message and the error indicator.

## Description

### Priority

This application claims the benefit of priority of U.S. Provisional Application No. 60/796,885, filed May 3, 2006, and U.S. Provisional Application No. 60/815,597, filed June 22, 2006, both of which are incorporated by reference herein in their entirety for any purpose.

### Technical Field

The present disclosure relates generally to methods and devices for communication systems and, more particularly, to methods and devices for error detection and retransmission in data communication systems.

### Background

Wireless communication systems allow wireless devices to communicate without the necessity of wired connections. Because wireless systems have become so integrated into daily life, there is a growing demand for wireless communication systems that support multimedia services such as speech, audio, video, file and web downloading, and the like. To support these multimedia services for wireless devices, various wireless communication protocols have been developed to accommodate the growing demands of multimedia services over wireless communication networks.

One such protocol is Wideband Code Division Multiple Access (W-CDMA), which is promulgated by the 3^{rd} Generation Partnership Project (3GPP^{™}), a collaboration of numerous standards development organizations. W-CDMA is a wideband spread-spectrum mobile air interface that uses a direct sequence Code Division Multiple Access (CDMA). W-CDMA has two basic modes of operation: Frequency Division Duplex (FDD) and Time Division Duplex (TDD).

In some embodiments, W-CDMA may support High Speed Downlink Packet Access (HSDPA), a packet data air interface which may be optimized for high-bit-rate packet data transmission. HSDPA may provide a set of channels (uplink and downlink), and associated procedures, to enable high-speed transmission of packet data.

W-CDMA may be used in, for example, Universal Mobile Telecommunications Systems (UMTS), a type of mobile communication technology. A UMTS communication system may provide telephony and bearer services in connectionless and connection-oriented communication networks, offering both Point-to-Point (P2P) and Point-to-Multipoint (P2MP) communication. In some UMTS communication systems, the air interface access method may be based on Universal Terrestrial Radio Access Networks (UTRAN) or, more recently, Evolved Universal Terrestrial Radio Access Networks (E-UTRAN).

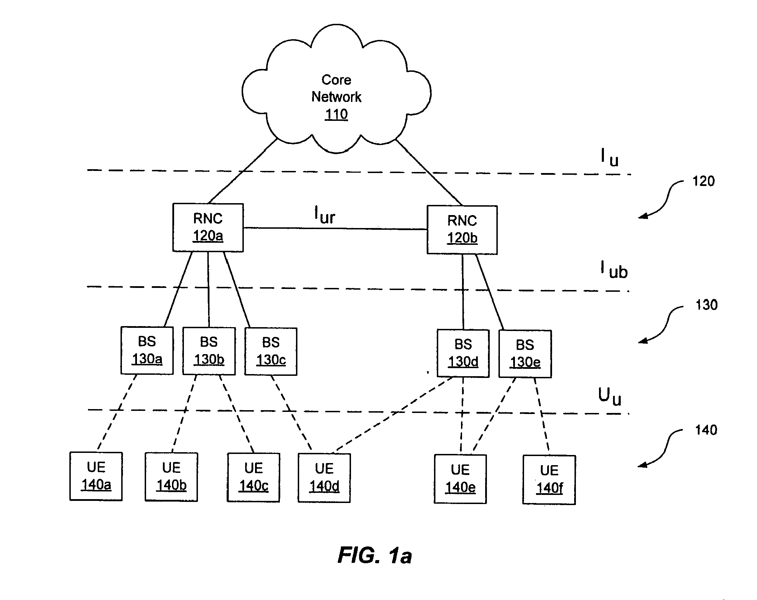

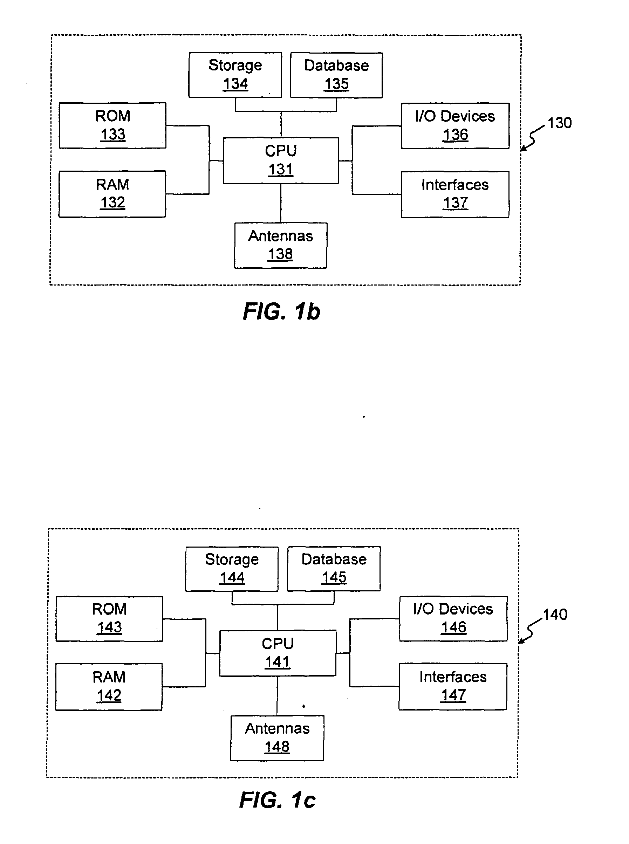

FIG. 1a is a block diagram of an exemplary UMTS communication system. As shown in FIG. 1a, a UMTS communication system may include Core Network (CN) 110, one or more Radio Network Controllers (RNC) 120, e.g., RNC 120a and RNC 120b, one or more Base Stations (BS) 130, e.g., BS 130a, BS 130b, BS 130c, BS 130d, and BS 130e; and one or more User Equipment (UE) 140, e.g., UE 140a, UE 140b, UE 140c, UE 140d, UE 140e, and UE 140f.

CN 110 may be a network or group of communication networks configured to provide communication services. CN 110 may provide, for example, switching, routing and transit for user traffic. In addition, CN 110 may maintain databases and network management functions. In some embodiments, CN 110 may be based on the Global System for Mobile Communications (GSM) network architecture. CN 110 may include any combination of wired and/or wireless connections.

RNC 120 may be any type of communication device configured to operate in the exemplary UMTS communication system, many of which are known in the art. RNC 120 may be responsible for resource management, mobility management, encryption, etc. in a UMTS communication system. In addition, RNC 120 may be responsible for the control of one or more BSs 130. Although not shown, RNCs 120 may be connected to CN 110 through one or more gateway devices and the like.

Each RNC 120 may include one or more of the following components: a central processing unit (CPU) configured to execute computer program instructions to perform various processes and methods, random access memory (RAM) and read only memory (ROM) configured to access and store information and computer program instructions, a memory to store data and information, databases to store tables, lists, or other data structures, I/O devices, interfaces, antennas, etc. Each of these components is well-known in the art and will not be discussed further.

BS 130 may be any type of communication device configured to transmit and/or receive data and/or communications to and from one or more UEs 140 in a UMTS communication system, many of which are known in the art. In some embodiments, BS 130 may also be referred to as, for example, a Node-B, a base transceiver system (BTS), an access point, etc. Communication between BSs 130 and RNCs 120 may be any combination of wired and/or wireless connections. Communication between BSs 130 and UEs 140 may be wireless. In one exemplary embodiment, BS 130 may have a broadcast/reception range within which BS 130 may wirelessly communicate with one or more UEs 140. Broadcast ranges may vary due to power levels, location, and interference (physical, electrical, etc.).

As shown in FIG. 1b, each BS 130 may include one or more of the following components: at least one central processing unit (CPU) 131 configured to execute computer program instructions to perform various processes and methods, random access memory (RAM) 132 and read only memory (ROM) 133 configured to access and store information and computer program instructions, memory 134 to store data and information, databases 135 to store tables, lists, or other data structures, I/O devices 136, interfaces 137, antennas 138, etc. Each of these components is well-known in the art and will not be discussed further.

UE 140 may be any type of computing device configured to wirelessly transmit and/or receive data to and from BS 130 in a UMTS communication system. UE 140 may include, for example, servers, clients, mainframes, desktop computers, laptop computers, network computers, workstations, personal digital assistants (PDA), tablet PCs, scanners, telephony devices, pagers, cameras, musical devices, etc. In one exemplary embodiment, UE 140 may be a mobile computing device.

As shown in FIG. 1c, each UE 140 may include one or more of the following components: at least one central processing unit (CPU) 141 configured to execute computer program instructions to perform various processes and methods, random access memory (RAM) 142 and read only memory (ROM) 143 configured to access and store information and computer program instructions, memory 144 to store data and information, databases 145 to store tables, lists, or other data structures, I/O devices 146, interfaces 147, antennas 148, etc. Each of these components is well-known in the art and will not be discussed further.

Communication between the CN 110, RNCs 120, BSs 130, and UEs 140 may be by means of logical connections. These logical connections may be referred to as interfaces. As shown in FIG. 1a, the logical connections between CN 110 and RNCs 120 may be referred to as Iu interfaces; the logical connections between RNCs 120 and one or more other RNCs 120 may be referred to as Iur interfaces; the logical connections between RNCs 120 and BSs 130 may be referred to as Iub interfaces; and the logical connection between BSs 130 and UEs 140 may be referred to as Uu interfaces. The Iu, Iur, and Iub interfaces may be implemented using Asynchronous Transfer Mode (ATM). The Uu interface may be implemented using W-CDMA.

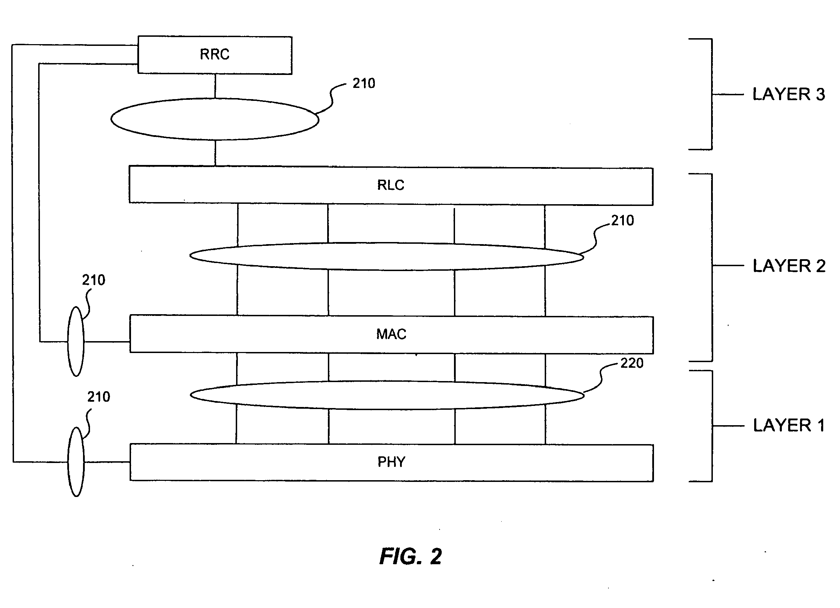

The radio interface protocol stack for W-CDMA, shown in FIG. 2, may include three layers. Layer 1 is the physical (PHY) layer. Layer 2, the data link layer, may include four sub-layers: the Medium Access Control (MAC), the Radio Link Control (RLC), the Broadcast/Multicast Control (BMC) (not shown) and the Packet Data Convergence Protocol (PDCP) (not shown). Layer 3, the network layer, may include the Radio Resource Control (RRC).

The PHY layer may offer information transfer services to the higher layers/sublayers through the use of uplink and downlink transport channels. The PHY layer may also perform error detection on transport channels, provide support for Hybrid Automatic Repeat Requests (HARQ), perform modulation and demodulation of physical channels, provide physical layer mapping, etc.

The MAC sub-layer may provide data transfer on logical channels (i.e., control channels and traffic channels), as well as mapping between the transport channels of the PHY layer and logical channels of the RLC sub-layer. In addition, the MAC sub-layer may provide hybrid automatic retransmission of data (i.e., HARQ). In some embodiments, the MAC sub-layer may be further divided into MAC-d and MAC-hs sub-layers.

The RLC sub-layer may provide data transfer to the upper layers (i.e., RRC, etc.) using, for example, Service Access Points (SAPs) 210. The RLC sub-layer may support the transfer and delivery of upper layer Packet Data Units (PDUs), Terminal Block (TB) segmentation and re-segmentation, etc. In addition, the RLC sub-layer may provide data ciphering and Automatic Repeat Request (ARQ) by means of logical channels.

The RRC sub-layer may be responsible for the radio resource allocation. The RRC sub-layer may also provide control and user plane signaling in a UMTS network. The RRC may send data and control signals to all the sub-layers in Layer 2 through, for example, Service Access Points (SAPs) 210.

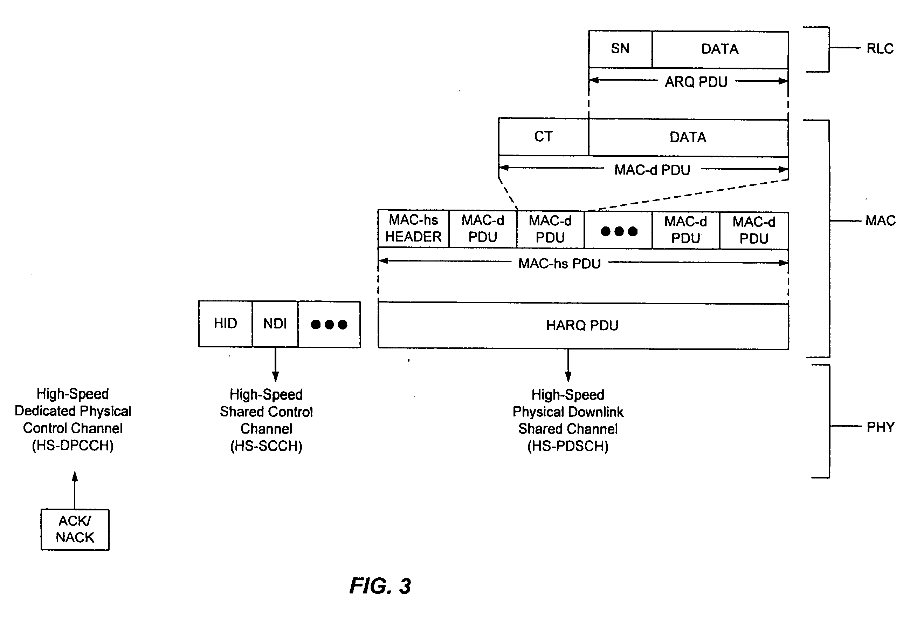

FIG. 3 is a diagram illustrating the data encapsulation performed for transmission on the High-Speed Downlink Shared Channel (HS-DSCH). Data to be transmitted on the downlink may be provided by the RLC layer of a transmitter in ARQ protocol data units (ARQ PDUs). ARQ PDUs may be PDUs that are encoded by an ARQ mechanism residing in the RLC layer. In addition to other data, each ARQ PDU may include a Sequence Number (SN). The SN may be used to identify a transmission order for one or more ARQ PDUs.

The MAC-d sub-layer may receive the one or more ARQ PDUs from the RLC layer and, in some embodiments, for each ARQ PDU, the MAC-d sub-layer may insert a CT field. The CT field may identify the logical channel associated with the ARQ PDU when multiple logical channels are carried on the same MAC-d.

The MAC-hs sub-layer may receive the one or more ARQ PDUs, combining them to form MAC-hs PDUs. In turn, each MAC-hs PDU may be encoded by the HARQ mechanism to form a HARQ PDU. The HARQ PDU may be transmitted to a receiving device, such as, for example, UE 140, by means of the High-Speed Downlink Shared Channel (HS-DSCH), which may be mapped to a High-Speed Physical Downlink Shared Channel (HS-PDSCH). In some embodiments, the HS-PDSCH may be shared by multiple receivers.

Concurrent with the transmission of data on the HS-PDSCH, control information for each HARQ PDU transmission may be sent on the High-Speed Shared Control Channel (HS-SCCH). This control information may include: (1) a HARQ process ID (HID), (2) a New Data Indicator (NDI), and (3) information identifying the UE 140 for which the control information and the corresponding data transmission are intended.

In some embodiments, the HID may consist of three bits, and may indicate the specific HARQ process associated with a given HARQ PDU. Because each HARQ PDU may be associated with a specific HARQ process, there may be up to eight HARQ PDU transmissions active at any given time.

The NDI may be used to indicate the transmission of a new HARQ PDU associated with a particular HARQ process. The NDI may be a single bit and may be equal to either "0" or "1." The transmitter may use the NDI value to identify a new HARQ PDU transmission by toggling the NDI value in successively transmitted HARQ PDUs between "1" and "0." At the receiving device, when the receiver determines that the NDI value has been toggled, HARQ Rx may clear any packet data previously stored in a soft buffer of the receiver. On the other hand, when the receiver determines that the NDI value has not been toggled, HARQ Rx may combine the received packet data with packet data previously stored in the soft buffer. Thus, for example, the receiver may receive a HARQ PDU and may compare the NDI value of the received PDU with the NDI value of the previously received HARQ PDU stored in the soft buffer. If the NDI value for the currently received packet data is different than the NDI value for the previously received packet data, the receiver may determine that the packet data is new packet data and may clear the soft buffer. Conversely, if the NDI value for the currently received packet data is the same as the NDI value for the previously received packet data, the receiver may determine that the packet data is a retransmission of the previously received packet data, and may combine the currently received packet data with the previously received packet data stored in the soft buffer.

When the receiving device receives packet data (new or retransmitted), the receiving device may generate and send either an ACK or NACK message to the transmitting device via the High-Speed Dedicated Physical Control Channel (HS-DPCCH). An ACK may be a message sent by a receiver to a transmitter to indicate that the receiver has correctly received transmitted data. A NACK may be a message sent by a receiver indicating that packet data has been received with one or more errors.

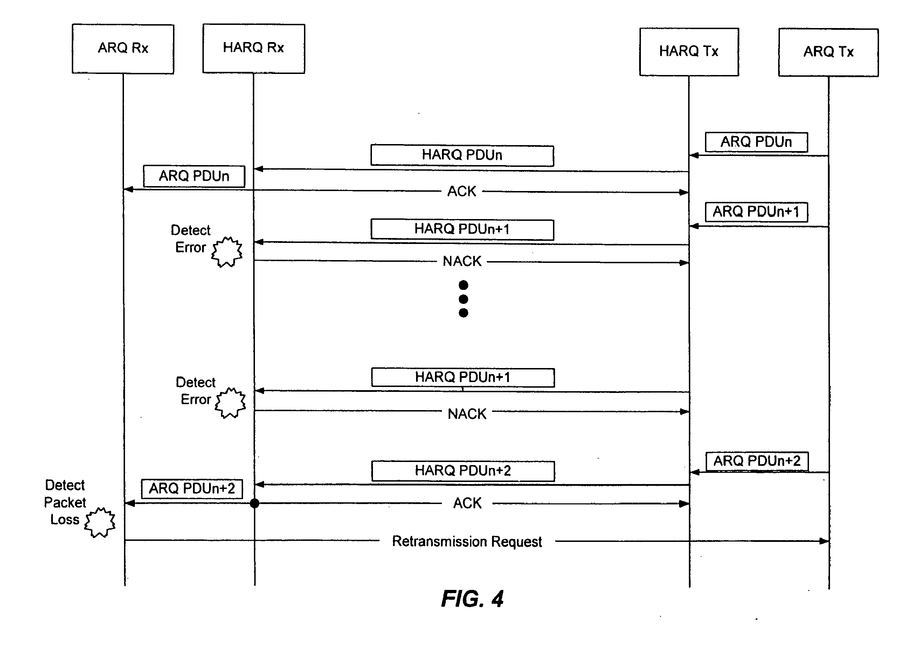

FIG. 4 is a signaling diagram illustrating operation of exemplary ARQ and HARQ mechanisms. For example, referring to FIG. 4, a transmitting device, e.g., BS 130, may include an ARQ transmitting (ARQ Tx) mechanism and a HARQ transmitting (HARQ Tx) mechanism. Similarly, a receiving device, e.g., UE 140, may include an ARQ receiving (ARQ Rx) mechanism and a HARQ receiving (HARQ Rx) mechanism. The ARQ Tx, HARQ Tx, ARQ Rx, and HARQ Rx mechanisms may be any combination of software and/or hardware components configured to cause the transmitting and/or receiving devices to perform the functionality associated with the disclosed embodiments. As discussed above, the ARQ Tx and ARQ Rx mechanisms may reside in the RLC sub-layer of the transmission and receiver devices, respectively, and the HARQ Tx and HARQ Rx mechanisms may reside in the MAC sub-layer of the transmission and receiver devices, respectively.

The ARQ Tx and ARQ Rx may be error recovery mechanisms configured to retransmit packet data when the packet data is either not received or received with errors. ARQ Tx and ARQ Rx may use a combination of ACKs, NACKs, and timeouts. Exemplary ARQ protocols may include Stop-And-Wait (SAW), Go-Back-N, and Selective Repeat.

The HARQ Tx and HARQ Rx may be error recovery mechanisms and may be variations of the ARQ Tx and ARQ Rx mechanisms. The HARQ Tx and HARQ Rx mechanisms may be responsible for encoding and decoding transmission packet data, providing encoded transmission packet data to the PHY layer, and providing decoded packet data to the higher layers. In one exemplary embodiment, the HARQ Tx mechanism may encode the packet data prior to transmission. When the encoded packet data is received, HARQ Rx may decode the packet data. If an error is detected, the received packet data may be stored in a soft buffer associated with the HARQ Rx mechanism, and the HARQ Rx mechanism may request a retransmission. Otherwise, the received packet data is forward to ARQ Rx. As discussed above in connection with FIG. 3, the HARQ Tx and HARQ Rx mechanisms may include a number of HARQ processes. In one exemplary embodiment, each HARQ process may be an instance of a stop and wait (SAW) protocol, and may be used to control the transmission/retransmission of data.

In one exemplary embodiment, when the HARQ Tx mechanism fails to receive an ACK before a timeout occurs, the HARQ Tx mechanism may retransmit the packet data until it is either received correctly or a certain number of retransmission attempts has been exceeded. Similarly, when a HARQ Tx mechanism receives a NACK, the HARQ Tx mechanism may retransmit the packet data until it is either received correctly or a certain number of retransmission attempts has been exceeded.

Referring to FIG. 4, ARQ Tx may process and provide ARQ PDUₙ to HARQ Tx. ARQ PDUₙ may include a SN. The SN may be used to facilitate the accurate transmittal and reception of PDUs between the transmitter and receiver. For example, at the transmitter, the SN may be used to ensure the PDUs are sent in a sequential order, and at the reciever, the SN may be used to determine if one or more PDUs are missing. The receiver may determine that one or more PDUs are missing if there are discrepancies in the received SNs, e.g., the SNs are out of order, there are missing sequence numbers, etc.

HARQ Tx may encode ARQ PDUₙ, thereby generating HARQ PDUₙ. HARQ Tx may assign an NDI value to HARQ PDUₙ, and transmit HARQ PDUₙ in sequential order to a receiver. In addition, HARQ Tx may store a copy of the transmitted HARQ PDUₙ in a retransmission buffer. The retransmission buffer may reside in the MAC sub-layer.

At the receiver, a corresponding HARQ Rx mechanism may receive HARQ PDUₙ and may attempt to decode the received HARQ PDUₙ. As shown in FIG. 4, HARQ Rx may successfully decode HARQ PDUₙ, sending the decoded data (i.e., ARQ PDUₙ) to ARQ Rx. HARQ Rx may synchronously send an ACK message to HARQ Tx, indicating that the packet data has been successfully received.

In response to the ACK message, HARQ Tx may clear HARQ PDUₙ from the retransmission buffer. In addition, HARQ Tx may toggle the NDI value for HARQ PDUₙ₊₁, received from ARQ Tx, and transmit HARQ PDUₙ₊₁ to the receiver. HARQ Tx may store a copy of the transmitted HARQ PDUₙ₊₁ in the retransmission buffer.

At the receiver, a corresponding HARQ Rx mechanism may receive HARQ PDUₙ₊₁ and attempt to decode HARQ PDUₙ₊₁. In this example, however, HARQ Rx may receive HARQ PDUₙ₊₁, but may detect an error. When an error is detected, HARQ Rx may send a NACK to HARQ Tx. In response, HARQ Tx may retransmit HARQ PDUₙ₊₁, stored in the retransmission buffer, to the receiver. HARQ Tx may continue to retransmit HARQ PDUₙ₊₁ until HARQ Rx either indicates, by sending an ACK, that HARQ PDUₙ₊₁ is received correctly or HARQ Tx determines that a predetermined maximum number of retransmissions has been reached.

If the maximum number of retransmissions is reached, HARQ Tx may clear HARQ PDUₙ₊₁ from the retransmission buffer. In addition, HARQ Tx may toggle the NDI value for HARQ PDUₙ₊₂, received from ARQ Tx, and transmit HARQ PDUₙ₊₂ to the receiver. HARQ Tx may store a copy of the transmitted HARQ PDUₙ₊₂ in the retransmission buffer.

At the receiver, HARQ Rx may receive and successfully decode HARQ PDUₙ₊₂. Thus, HARQ Rx may send an ACK message to HARQ Tx and forward the decoded ARQ PDUₙ₊₂ to ARQ Rx. In addition, when HARQ Rx successfully receives packet data, the soft buffer may be cleared. For example, once HARQ Rx receives HARQ PDUₙ₊₂, HARQ Rx will clear HARQ PDUₙ₊₁ from the soft buffer. Because ARQ Rx checks the SN, ARQ Rx may determine that ARQ PDUₙ₊₁ was lost. When ARQ Rx determines that ARQ PDUₙ₊₁ was lost, ARQ Rx may initiate and send a retransmission request to ARQ Tx, causing ARQ Tx to retransmit ARQ PDUₙ₊₁.

As discussed above, when packet data is not received or an error is detected, HARQ and ARQ mechanisms may be used to recover the packet data. The use of both ARQ and HARQ mechanisms may provide two layer protection against packet data loss. That is, because the ARQ mechanism operates in the RLC layer and the HARQ mechanism operates in the MAC layer, both the RLC and MAC layers may function to recover and/or correct packet data.

However, because the ARQ mechanism resides at a higher layer, retransmission by the ARQ mechanism may be slower and consume a greater number of resources. Moreover, retransmission at the RLC layer may cause delays that are too great to support transmission of real-time data.

### Summary of the Invention

In one exemplary embodiment, the present disclosure is directed to a method for identifying errors in a wireless communication system, comprising: transmitting, by a transmitting device, data to a receiving device; receiving, from the receiving device, a receipt message, wherein the receipt message is in response to the data; receiving, from the receiving device, an error indicator, wherein the error indicator is associated with the data; and determining an error type based on at least one of the receipt message and the error indicator.

In another exemplary embodiment, the present disclosure is directed to a method for identifying errors in a wireless communication system, comprising: sending, by a transmitting device, data to a receiving device; receiving, from the receiving device, a receipt message, wherein the receipt message is in response to the data; receiving, from the receiving device, an error indicator, wherein the error indicator is associated with the data; and determining an error type based on at least one of the receipt message and the error indicator, wherein the error indicator includes at least one of a new data indicator and an expected data value.

In another exemplary embodiment, the present disclosure is directed to a method for identifying errors in a wireless communication system, comprising: receiving data from a transmitting device, wherein the data includes a new data indicator; sending, to the transmitting device, a receipt message, wherein the receipt message is in response to the data; determining, by a receiving device, if there is at least one error associated with the data; and sending, when the at least one error is determined, an error indicator to the transmitting device, wherein the error indicator includes at least one of a new data indicator and an expected data value.

In another exemplary embodiment, the present disclosure is directed to a wireless communication station for wireless communication, the wireless communication station comprising: at least one memory to store data and instructions; and at least one processor configured to access the memory and configured to, when executing the instructions: send transmission data to a receiving device; receive, from the receiving device, a receipt message, wherein the receipt message is in response to the transmission data; receive, from the receiving device, an error indicator, wherein the error indicator is associated with the transmission data; and determine an error type based on at least one of the receipt message and the error indicator.

In another exemplary embodiment, the present disclosure is directed to a wireless communication station for wireless communication, the wireless communication station comprising: at least one memory to store data and instructions; and at least one processor configured to access the memory and configured to, when executing the instructions: send transmission data to a receiving device; receive, from the receiving device, a receipt message, wherein the receipt message is in response to the transmission data; receive, from the receiving device, an error indicator, wherein the error indicator is associated with the transmission data; and determine an error type based on at least one of the receipt message and the error indicator, wherein the error indicator includes at least one of a new data indicator and an expected data value.

In another exemplary embodiment, the present disclosure is directed to a wireless communication device for wireless communication, the wireless communication device comprising: at least one memory to store data and instructions; and at least one processor configured to access the memory and configured to, when executing the instructions: receive transmission data from a transmitting device, wherein the transmission data includes a new data indicator; send, to the transmitting device, a receipt message, wherein the receipt message is in response to the transmission data; determine if there is at least one error associated with the transmission data; and send, when the at least one error is determined, an error indicator to the transmitting device, wherein the error indicator includes at least one of a new data indicator and an expected data value.

### Brief Description of the Drawings

FIG. 1a is a block diagram of an exemplary UMTS communication system;

FIG. 1b is a block diagram of an exemplary BS;

FIG. 1c is a block diagram of an exemplary UE;

FIG. 2 illustrates an exemplary W-CDMA layer diagram;

FIG. 3 illustrates an exemplary W-CDMA layer diagram for processing PDUs;

FIG. 4 is a signaling diagram of an exemplary packet data flow in a UMTS communication system;

FIG. 5a is a flowchart illustrating an exemplary packet data processing, consistent with certain disclosed embodiments;

FIG. 5b is a flowchart illustrating an exemplary packet data processing, consistent with certain disclosed embodiments;

FIG. 6a is a signaling diagram of an exemplary NDI toggling, consistent with certain disclosed embodiments;

FIG. 6b is a signaling diagram of an exemplary Type 4 error processing, consistent with certain disclosed embodiments;

FIG. 6c is a signaling diagram of an exemplary Type 4 error processing, consistent with certain disclosed embodiments;

FIG. 7a is a signaling diagram of an exemplary Type 2 error processing, consistent with certain disclosed embodiments;

FIG. 7b is a signaling diagram of an exemplary Type 2 error processing, consistent with certain disclosed embodiments;

FIG. 8a is a signaling diagram of an exemplary Type 6 error processing, consistent with certain disclosed embodiments;

FIG. 8b is a signaling diagram of an exemplary Type 6 error processing, consistent with certain disclosed embodiments;

FIG. 9a is a signaling diagram of an exemplary Type 7 error processing, consistent with certain disclosed embodiments;

FIG. 9b is a signaling diagram of an exemplary Type 7 error processing, consistent with certain disclosed embodiments;

FIG. 10a is a signaling diagram of an exemplary Type 3 error processing, consistent with certain disclosed embodiments;

FIG. 10b is a signaling diagram of an exemplary Type 3 error processing consistent with certain disclosed embodiments;

FIG. 11 is a flow chart illustrating an exemplary determination of Type 2, Type 4, and Type 6 errors, consistent with certain disclosed embodiments; and

FIG. 12 is a flow chart illustrating an exemplary determination of Type 2, Type 3, Type 4, Type 6, and Type 7 errors, consistent with certain disclosed embodiments.

### Detailed Description

In a communication system utilizing HSDPA, there may be seven distinct error types embedded in the HS-PDSCH, HS-SCCH, and HS-DPCCH channels. These error types will be referred to herein by numerical values for clarity. HS-PDSCH may include a Type 1 error (i.e., undetected error in the Cyclic Redundancy Check (CRC)) and a Type 2 error (i.e., error when maximum number of transmissions is reached). Three types of errors may occur in the HS-SCCH: a Type 3 error (i.e., DTX→ACK error), a Type 4 error (i.e., NDI misinterpretation), and a Type 5 error (i.e., other control information misinterpretation in HARQ). Two types of errors may occur in the HS-DPCCH: a Type 6 error (i.e., NACK→ACK error) and a Type 7 error (i.e., ACK→NACK error).

A Type 1 error may occur when a corrupted PDU cannot be detected by the CRC check. The lost PDU due to this type of error can only be recovered through retransmission via ARQ. Type 1 errors are beyond the scope of this disclosure and will not be discussed herein further. A Type 2 may occur when the maximum number of retransmissions for a HARQ PDU is reached but no ACK is received by HARQ Tx. PDU retransmission is necessary via ARQ to recover the lost PDU. A Type 3 error may occur when HARQ Rx sends a DTX message, indicating an error in control information is detected by 16-bit CRC checking at HARQ Rx, but HARQ Tx misinterprets the DTX as an ACK. PDU retransmission is necessary via ARQ to recover the lost PDU due to a Type 3 error. A Type 4 error may occur when the NDI value received by a HARQ Rx is misinterpreted. When a Type 4 error is generated, data previously stored in the soft buffer of HARQ Rx may be flushed by HARQ Rx and lost. A Type 5 error may occur when there is PDU loss due to misinterpretation of control information other than the NDI. For example, a Type 5 error may be associated with Channelization Code Set, Modulation Scheme, Transport Block Size, HARQ Process Identifier, Redundancy and Constellation Version, etc. Type 5 errors are beyond the scope of this disclosure and will not be discussed herein further. A Type 6 error may occur when a NACK sent by HARQ Rx is misinterpreted as an ACK by HARQ Tx. As a result of a Type 6 error, HARQ Tx may flush the retransmission buffer and deliver a new HARQ PDU, resulting in PDU loss. PDU retransmission may be necessary via ARQ to recover the lost PDU. Finally, a Type 7 error may occur when an ACK is misinterpreted as a NACK. When a Type 7 error occurs, HARQ Tx may retransmit the HARQ PDU, causing HARQ Rx to redundantly receive the HARQ PDU. While the resulting redundant retransmission and duplicate packets associated with a Type 7 error may deteriorate the performance of HARQ processing, PDU loss does not occur, and it is not necessary for ARQ Tx to retransmit the PDU.

These seven error types may be classified into two categories depending on whether PDU loss occurs or not: residual HARQ errors and non-residual HARQ errors. Residual HARQ errors, those corresponding to Type 1, Type 2, Type 3, Type 5, and Type 6, may result in packet loss, and may trigger ARQ retransmission to recover the lost PDUs. Non-residual HARQ errors, those corresponding to Type 4 and Type 7, may deteriorate performance but may not result in PDU loss. In some embodiments, non-residual HARQ errors may not require ARQ retransmission.

Because not all errors require retransmission, it is possible to further reduce the number of retransmissions by identifying those errors that do not require retransmission. By identifying those errors which may not need ARQ retransmission and permitting retransmission by the ARQ mechanism only for those errors that require it, system performance may be further increased.

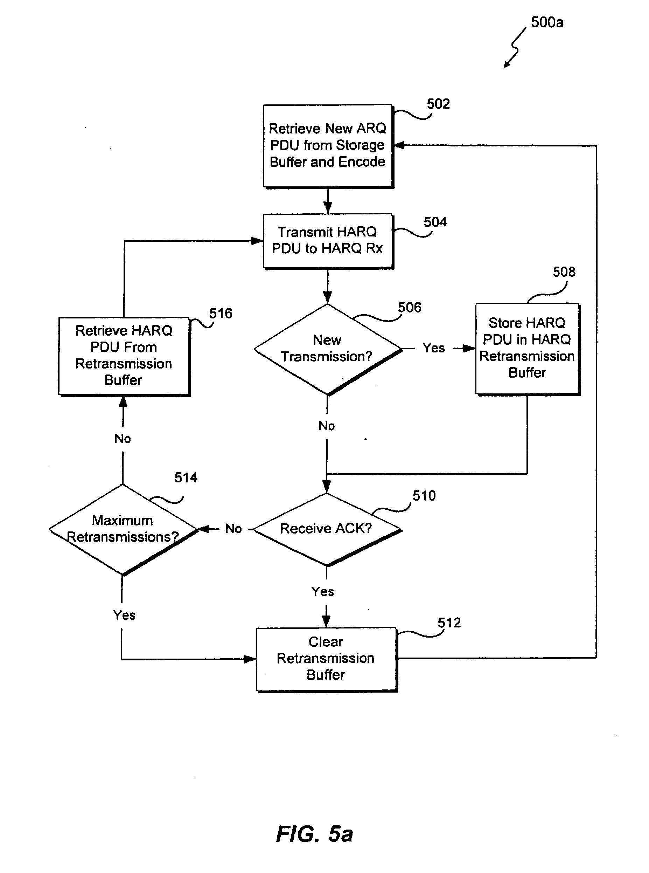

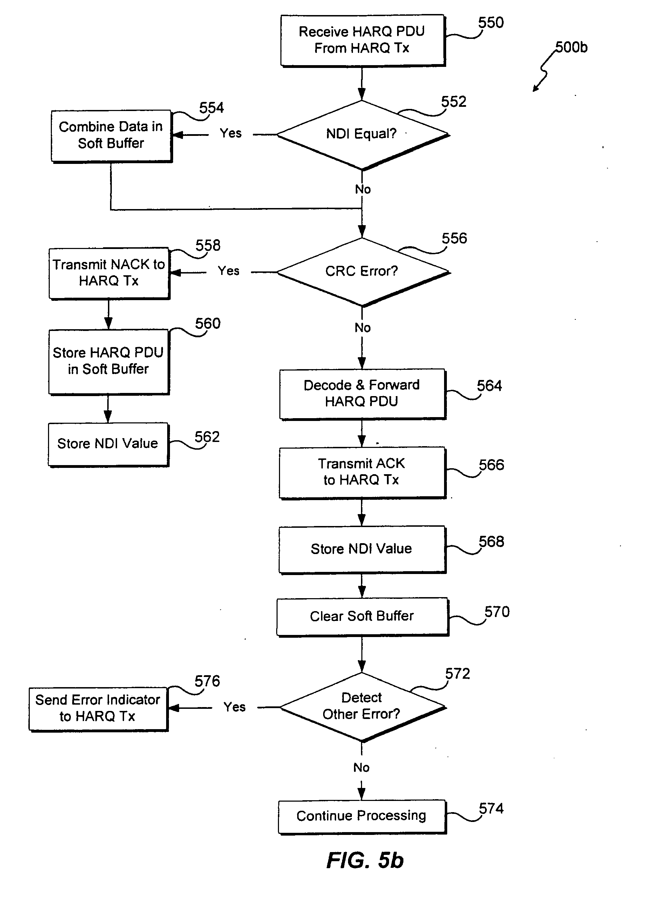

FIGS. 5a and 5b illustrate flowcharts 500a and 500b of exemplary packet data processing between a HARQ Tx mechanism and a HARQ Rx mechanism, consistent with certain disclosed embodiments. The exemplary packet data processing of FIGS. 5a and 5b may be implemented in a UMTS communication system as discussed in connection with FIG. 1a. In the exemplary method illustrated by FIGS. 5a and 5b, HARQ Rx, upon detecting an error associated with a received HARQ PDU, may generate and send an error message to HARQ Tx.

For transmission and reception, HARQ Tx and HARQ Rx may use a technique called Incremental Redundancy. For each new transmission of HARQ PDU, HARQ Tx may first create Redundancy Version 0 (RVO) of HARQ PDU, and then transmit RV0 of HARQ PDU to HARQ Rx. For each retransmission of HARQ PDU, HARQ Tx may create a subsequent Redundancy Version (RV) (i.e., RV1, RV2, etc.) of HARQ PDU and transmit the subsequent RVs to HARQ Rx. Thus, HARQ Tx transmits different versions of the HARQ PDU with each retransmission. Each RV may have two characteristics: (1) it may be recovered by HARQ Rx to obtain the original HARQ PDU, and (2) different RVs of the same HARQ PDU may be combined, increasing the ability of the combined RVs to recover to the original information.

Referring to flowchart 500a of FIG. 5a, HARQ Tx may retrieve and encode an ARQ PDU from a storage buffer, generating a HARQ PDU (step 502). Because this is a new transmission, HARQ Tx may create RV0 of HARQ PDU. In addition, HARQ Tx may assign an NDI to HARQ PDU. The NDI may be used to differentiate between newly transmitted HARQ PDUs and retransmitted HARQ PDUs. For example, as discussed above, the NDI value may be toggled between "0" and "1" for sequential transmissions of new HARQ PDUs, whereas the NDI value may remain unchanged for sequential retransmissions of the same HARQ PDU.

HARQ Tx may transmit the encoded HARQ PDU, in sequential order, to HARQ Rx (step 504). If this is a new transmission (step 506, Yes), HARQ Tx may store a copy of the transmitted HARQ PDU in a retransmission buffer associated with the HARQ Tx (step 508).

Once HARQ Tx has transmitted (or retransmitted) HARQ PDU, HARQ Tx may await a response from HARQ Rx. If HARQ Tx receives an ACK (step 510, Yes), HARQ Tx may clear the retransmission buffer (step 512) and processing may return to step 502.

If HARQ Tx fails to receive an ACK (step 510, No), instead receiving either a NACK or no response within the time-out period, HARQ Tx may check to see if the maximum number of retransmissions has been reached (step 514). If the maximum number of retransmissions has been reached, HARQ Tx may clear the retransmission buffer (step 512) and processing may return to step 502.

If the maximum number of retransmissions has not been reached (step 514, No), HARQ Tx may retrieve HARQ PDU from the retransmission buffer, calculate the new RV, and retransmit HARQ PDU to HARQ Rx. Processing will continue in this manner until either an ACK is received by HARQ Tx or a maximum number of retransmissions has been reached.

Referring now to the exemplary flowchart 500b of FIG. 5b, HARQ Rx may receive the transmitted HARQ PDU from HARQ Tx (step 550), and check its NDI value (step 552). If the NDI value of the HARQ PDU is equal to the NDI value of a previously received HARQ PDU (step 552, Yes), then HARQ Rx may combine the received packet data with packet data previously stored in the soft buffer (step 554), and evaluate the received HARQ PDU to determine if a CRC error has been detected (step 556).

If a CRC error is detected (step 552, Yes), HARQ Rx may transmit a NACK to HARQ Tx (step 558) and store the received HARQ PDU in the soft buffer associated with HARQ Rx (step 560). In addition, HARQ Rx may separately store the NDI value for the currently received HARQ PDU (step 562).

If a CRC error is not detected (step 556, No), HARQ Rx may decode and forward HARQ PDU to ARQ Rx (step 564). In some embodiments, HARQ Rx may transmit an ACK to HARQ Tx (step 566), and store the NDI value associated with the received HARQ PDU (step 568). If HARQ Rx successfully receives HARQ PDU and sends an ACK to HARQ Tx, any previously received HARQ PDUs stored in the soft buffer may be cleared (step 570).

In addition, HARQ Rx may evaluate the received HARQ PDU for other errors (step 572). In some embodiments, the other errors may include one or more of, for example, a Type 2 error, a Type 3 error, a Type 4 error, a Type 6 error, a Type 7 error, etc. If HARQ Rx determines that an error has not occurred (step 572, No), HARQ Rx may continue processing (step 574).

However, if HARQ Rx determines that an error has occurred (step 572, Yes), HARQ Rx may send an error indicator to HARQ Tx (step 576). The error indicator may be a message transmitted from HARQ Rx to HARQ Tx to indicate that an unexpected reception has been detected by HARQ Rx. The error indicator may include any value or combination of values. In some embodiments, the error indicator may include a single error indicator value, such as, for example, a "0" or a "1." In other embodiments, the error indicator may include a plurality of values. In one exemplary embodiment, the error indicator may include an "NDIₑ " value and an "S" value. The NDIₑ value may be equal to the NDI value of the last HARQ PDU received by HARQ Rx. The S value may provide an indication of the type of data received by HARQ Rx in relation to the type of value expected by HARQ Rx. That is, when HARQ Rx receives may indicate, by means of the S value, that it has received unexpected packet data. For example, if HARQ Rx receives a new HARQ PDU transmission instead of an expected retransmission, S may be equal to 0. However, If HARQ Rx receives a retransmitted HARQ PDU transmission instead of an expected new transmission, S may be equal to 1. HARQ Rx may determine and set the S value based on previously transmitted ACK and NACK data, as well as previously received NDI data.

For example, if HARQ Rx receives HARQ PDUₙ and sends a NACK to HARQ Tx, HARQ Rx may expect a retransmission of HARQ PDUₙ. However, if the next received HARQ PDU, i.e., HARQ PDUₙ₊₁ has an NDI value that is different than that of the previously received HARQ PDU, i.e., HARQ PDUₙ, HARQ Rx may detect an error because the toggled NDI value may indicate new data and HARQ Rx may have expected a retransmission of HARQ PDUₙ. Therefore, HARQ Rx may set the S value equal to 1. As another example, if HARQ Rx receives HARQ PDUₙ and sends an ACK to HARQ Tx, HARQ Rx may expect a new transmission, i.e., HARQ PDUₙ₊₁. If, in response to the ACK, HARQ Tx send HARQ PDUₙ₊₁ but the NDI value of HARQ PDUₙ₊₁ is untoggled (i.e., the NDI value of HARQ PDUₙ₊₁ is the same as the the NDI value of HARQ PDUₙ), HARQ Rx may believe it is receiving a retransmission of HARQ PDUₙ instead of new data. Thus, HARQ Rx may detect an error and set the S value equal to 0.

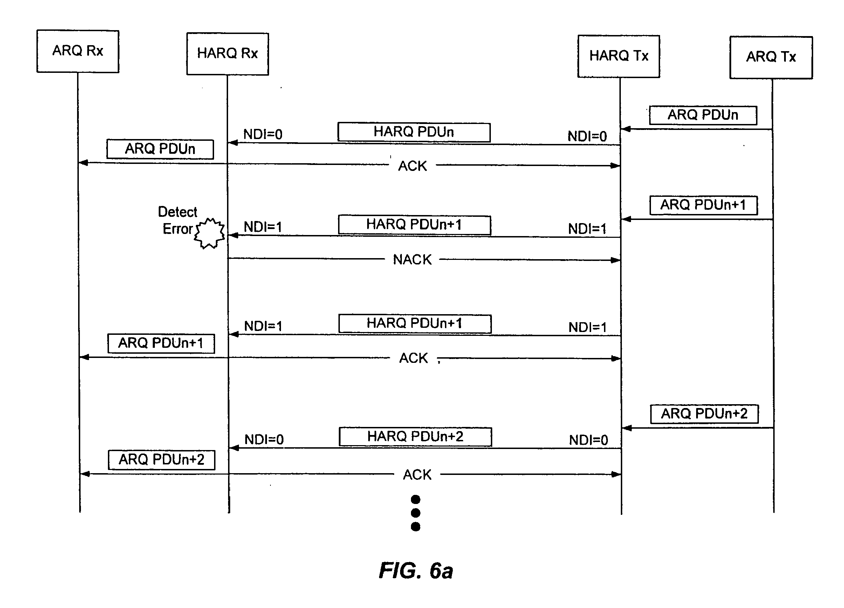

FIG. 6a is a signaling diagram illustrating exemplary toggling of the NDI value, consistent with certain embodiments. As discussed above, the NDI value may be toggled between 0 and 1 to indicate when a HARQ PDU is a new transmission.

For example, as shown in FIG. 6a, ARQ Tx may process and send ARQ PDUₙ to HARQ Tx. HARQ Tx may encode ARQ PDUₙ, thereby generating HARQ PDUₙ. HARQ Tx may set an NDI value for HARQ PDUₙ, and then transmit HARQ PDUₙ in sequential order to a receiver. In this example, the NDI value for HARQ PDUₙ may be equal to 0. HARQ Tx may store the transmitted HARQ PDUₙ in a retransmission buffer.

At the receiver, a corresponding HARQ Rx mechanism may receive HARQ PDUₙ, and check its NDI value. As shown in FIG. 6a, HARQ Rx may determine the NDI value of the received HARQ PDUₙ is equal to 0. HARQ Rx may compare the NDI value of HARQ PDUₙ with the NDI value of a previously recieved HARQ PDU. If HARQ Rx encounters no errors, HARQ Rx may send the decoded HARQ PDUₙ (i.e., ARQ PDUₙ) to ARQ Rx. HARQ Rx may synchronously send an ACK message to HARQ Tx, indicating that HARQ PDUₙ was successfully received.

Upon receipt of the ACK message, HARQ Tx may clear the retransmission buffer and may prepare to transmit the next encoded ARQ PDU (i.e., HARQ PDUₙ₊₁) to HARQ Rx. Because this is a new data transmission, HARQ Tx may toggle the NDI value for HARQ PDUₙ₊₁ from 0 to 1. HARQ Tx may send HARQ PDUₙ₊₁ to HARQ Rx, and store HARQ PDUₙ₊₁ in the retransmission buffer.

At the receiver, HARQ Rx may receive HARQ PDUₙ₊₁ and check its NDI value. As shown in FIG. 6a, HARQ Rx may determine the NDI value of the received HARQ PDUₙ₊₁ is equal to 1. However, HARQ Rx may detect an error associated with HARQ PDUₙ₊₁, and may send a NACK message to HARQ Tx, indicating that HARQ PDUₙ₊₁ was not successfully received. In one embodiment, HARQ Rx may store the received HARQ PDUₙ₊₁ in a soft buffer. In addition, HARQ Rx may separately store the NDI value associated with HARQ PDUₙ₊₁.

Upon receiving the NACK message, HARQ Tx may retrieve HARQ PDUₙ₊₁ from the retransmission buffer and resend HARQ PDUₙ₊₁ to HARQ Rx. Because this is a retransmission of data, HARQ Tx may not toggle the NDI value. Thus, the NDI value for the second transmission of HARQ PDUₙ₊₁, and any subsequent retransmissions of HARQ PDUₙ₊₁, may be the same as the NDI value of the initial transmission of HARQ PDUₙ₊₁.

At the receiver, HARQ Rx may receive the retransmission of HARQ PDUₙ₊₁ and check its NDI value. As shown in FIG. 6a, HARQ Rx may determine the NDI value of the received HARQ PDUₙ₊₁ is equal to 1. Because HARQ Rx was expecting a retransmission, HARQ Rx may verify that the NDI value for the retransmission is the same as the NDI value for the previously received transmission. In one exemplary embodiment, HARQ Rx may compare the most currently received NDI value with the NDI value stored for the previously received HARQ PDU. In this example, the NDI value of HARQ PDUₙ₊₁ is again equal to 1, a value equal to the NDI value of the previously received HARQ PDU. Thus, HARQ Rx may combine the received packet data with packet data previously stored in the soft buffer. If HARQ Rx encounters no errors, HARQ Rx may send an ACK message to HARQ Tx and forward the decoded HARQ PDUₙ₊₁ (i.e., ARQ PDUₙ₊₁) to ARQ Rx.

Upon receipt of the ACK message, HARQ Tx may clear the retransmission buffer and prepare to transmit the next encoded ARQ PDU (i.e., HARQ PDUₙ₊₂) to HARQ Rx. Because this is a new data transmission, HARQ Tx may toggle the NDI value for HARQ PDUₙ₊₂ from 1 to 0. HARQ Tx may send HARQ PDUₙ₊₂ to HARQ Rx, and store HARQ PDUₙ₊₂ in the retransmission buffer.

At the receiver, HARQ Rx may receive HARQ PDUₙ₊₂ and check its NDI value. As shown in FIG. 6a, HARQ Rx may determine the NDI value of the received HARQ PDUₙ₊₂ is equal to 0. HARQ Rx may verify that the NDI value of the current transmission is different than the NDI value of the previously received transmission. For example, HARQ Rx may compare the NDI value of HARQ PDUₙ₊₂ with the NDI value of HARQ PDUₙ₊₁.

If HARQ Rx encounters no errors, HARQ Rx may send an ACK message to HARQ Tx, and forward the decoded HARQ PDUₙ₊₂ (i.e., ARQ PDUₙ₊₂) to ARQ Rx. If the previously received HARQ PDU contained an error, HARQ Rx may clear the soft buffer upon successfully receiving HARQ PDUₙ₊₂. This process may continue until there is no further data to transmit between the transmitter and the receiver.

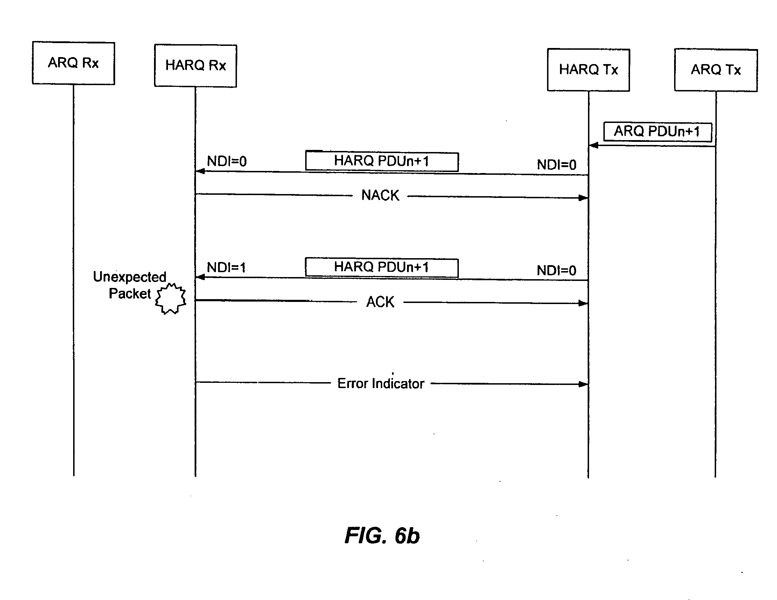

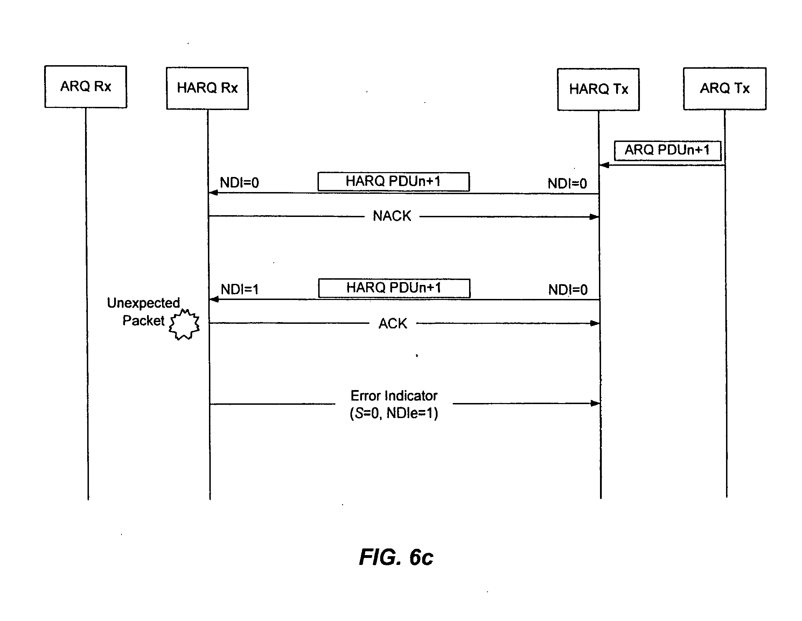

FIGS. 6b and 6c are exemplary signaling diagrams illustrating Type 4 error processing, consistent with certain embodiments. As discussed above, a Type 4 error may be an error in which the value of the NDI received by HARQ Rx is not equal to the value expected by HARQ Rx. The NDI value can be unexpected when (1) the HARQ Rx is expecting a retransmission but the NDI value has been toggled by HARQ Tx or (2) the HARQ Rx is expecting a new PDU but the NDI value has not been toggled by HARQ Tx. The exemplary signaling diagrams of FIGS. 6a, 6b, and 6c may be implemented in a UMTS communication system as discussed in connection with FIG. 1a.

For example, referring to FIG. 6b, ARQ Tx may process and send ARQ PDUₙ₊₁ to a storage buffer. HARQ Tx may retrieve ARQ PDUₙ₊₁ from the storage buffer and encode it, thereby generating HARQ PDUₙ₊₁. HARQ Tx may assign an NDI value to HARQ PDUₙ₊₁, and then transmit HARQ PDUₙ₊₁ to HARQ Rx. In addition, HARQ Tx may store a copy of HARQ PDUₙ₊₁ in a retransmission buffer.

At the receiver, HARQ Rx may receive HARQ PDUₙ₊₁ and check its NDI value. As shown in FIG. 6a, HARQ Rx may determine the NDI value of the received HARQ PDUₙ₊₁ is equal to 0. However, HARQ Rx may detect an error associated with HARQ PDUₙ₊₁, and may send a NACK message to HARQ Tx, indicating that the data has not been successfully received. HARQ Rx may store a copy of HARQ PDUₙ₊₁ in a soft buffer associated with HARQ Rx. In addition, HARQ Rx may separately store a copy of the NDI value of HARQ PDUₙ₊₁ in a memory region associated with HARQ Rx.

Upon receiving the NACK message, HARQ Tx may retrieve HARQ PDUₙ₊₁ from the retransmission buffer and retransmit HARQ PDUₙ₊₁ to HARQ Rx. Because this is a retransmission of data, HARQ Tx may determine not to toggle the NDI value. Thus, the NDI value for the second transmission, and any subsequent retransmissions, may be the same as the NDI value of the initial transmission of HARQ PDUₙ₊₁.

At the receiver, HARQ Rx may receive the retransmission of HARQ PDUₙ₊₁ and attempt to decode HARQ PDUₙ₊₁. In addition, HARQ Rx may check the NDI value. As shown in FIG. 6b, however, HARQ Rx may determine the NDI value of the received HARQ PDUₙ₊₁ is equal to 1. HARQ Rx may verify that the NDI value for the retransmission by comparing it to the stored NDI value for the previously received transmission. In this example, the NDI value is equal to 1, which is not equal to the NDI value of the previously received HARQ PDUₙ₊₁. Thus, HARQ Rx may clear the soft buffer. If HARQ Rx encounters no errors, HARQ Rx may send an ACK message to HARQ Tx indicating that HARQ PDUₙ₊₁ has been received, but may also send an error indicator notifying HARQ Tx that an unexpected reception has been detected.

Referring to FIG. 6c, using the same scenario as in FIG. 6b, HARQ Rx may send an error indicator in response to a detected error. However, in this embodiment, the error indicator may include two values, S and NDIₑ, as discussed above in connection with FIG. 5. In this example, because HARQ Rx was expecting a retransmission of data, but instead has determined; based on the NDI value, that new data has been received, the value of S may be equal to 0. The NDIₑ value may be set to the NDI value received by HARQ Rx for HARQ PDUₙ₊₁. Thus, in this example, the NDIₑ value may be equal to 1.

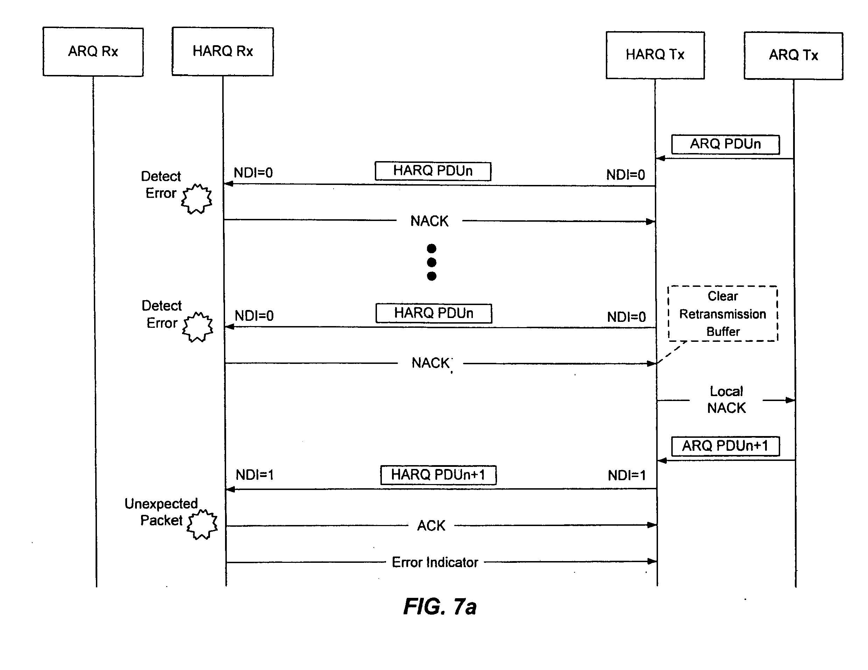

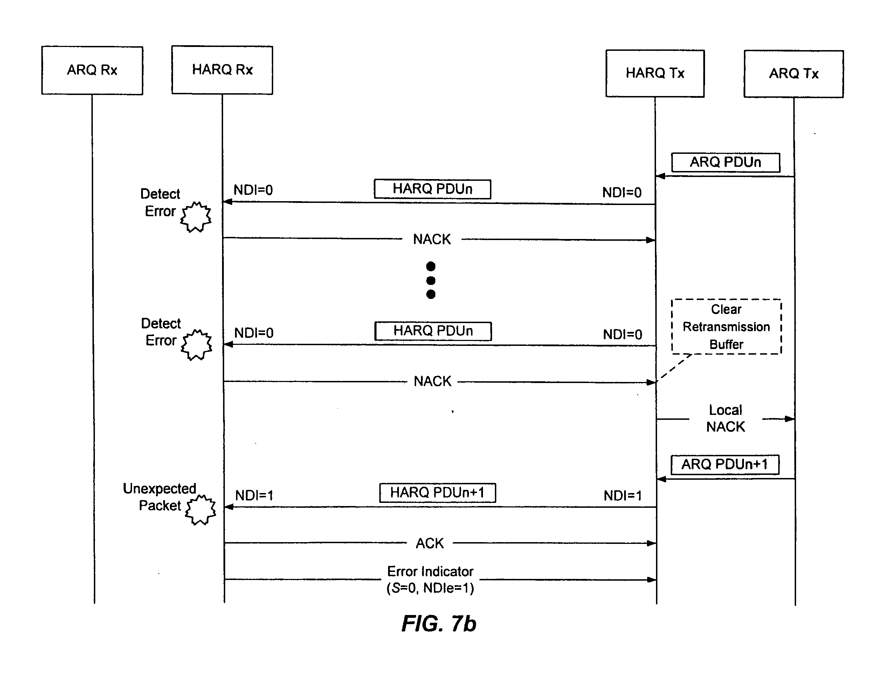

FIGS. 7a and 7b are exemplary signaling diagrams illustrating Type 2 error processing, consistent with certain embodiments. As discussed above, a Type 2 error may occur when a predetermined number of retransmissions is reached without HARQ Tx receiving an ACK from HARQ Rx. When a Type 2 error occurs, ARQ Tx may be required to resend the lost PDU. The exemplary signaling diagrams of FIGS. 7a and 7b may be implemented in a UMTS communication system as discussed in connection with FIG. 1a.

For example, referring to FIG. 7a, ARQ Tx may process and send ARQ PDUₙ to a storage buffer. HARQ Tx may retrieve ARQ PDUₙ from the storage buffer and encode it, thereby generating HARQ PDUₙ. HARQ Tx may assign an NDI value to HARQ PDUₙ, and then transmit HARQ PDUₙ to the receiver. In this example, HARQ Tx may set NDI=0. In addition, HARQ Tx may store HARQ PDUₙ in a retransmission buffer.

At the receiver, HARQ Rx may receive HARQ PDUₙ, and check its NDI value. As shown in FIG. 7a, HARQ Rx may determine the NDI value of the received HARQ PDUₙ is equal to 0. However, HARQ Rx may detect an error associated with HARQ PDUₙ, and may send a NACK message to HARQ Tx, indicating that the data has not been successfully received. In addition, HARQ Rx may store HARQ PDU in a soft buffer associated with HARQ Rx, and may separately store a copy of the NDI value of HARQ PDUₙ.

Upon receiving the NACK message, HARQ Tx may retrieve HARQ PDUₙ from the retransmission buffer and retransmit HARQ PDUₙ to HARQ Rx. Because this is a retransmission of data, HARQ Tx may determine not to toggle the NDI value. Thus, the NDI value for the second transmission, and any subsequent retransmissions, of HARQ PDUₙ may be the same as the NDI value of the initial transmission of HARQ PDUₙ, equal to 0 in this example.

At the receiver, HARQ Rx may receive the retransmission of HARQ PDUₙ and attempt to decode HARQ PDUₙ. In addition, HARQ Rx may check the NDI value. HARQ Rx may determine the NDI value of the received HARQ PDUₙ is equal to 0. Thus, HARQ Rx may combine the received HARQ PDU with HARQ PDU previously stored in the soft buffer. However, HARQ Rx may again detect an error associated with HARQ PDUₙ, and may send a NACK message to HARQ Tx, indicating that the data has not been successfully received.

This scenario may be repeated until the maximum number of retransmissions by HARQ Tx has been reached, at which time, HARQ Tx may clear the retransmission buffer and send a local NACK to ARQ Tx. For example, HARQ Tx may only be allowed a maximum number of three attempted retransmissions before the retransmission buffer is cleared, a local NACK is generated, and the local NACK is sent to ARQ Tx.

When the maximum number of retransmissions is reached, HARQ Tx may encode the next ARQ PDU, e.g., ARQ PDUₙ₊₁, and set its NDI value. In this example, because this is new data, HARQ Tx may toggle the NDI value, setting NDI=1. HARQ Tx may then transmit HARQ PDUₙ₊₁ to HARQ Rx and store HARQ PDUₙ₊₁ in a retransmission buffer.

At the receiver, HARQ Rx may receive the transmission of HARQ PDUₙ₊₁ and check its NDI value. As shown in FIG. 7a, HARQ Rx may determine the NDI value of HARQ PDUₙ₊₁ is equal to 1. HARQ Rx may compare the NDI value for the current transmission to the NDI value for the previously received transmission, i.e., HARQ PDUₙ. In this example, the NDI value may be equal to 1, which is not equal to the stored NDI value of HARQ PDUₙ. Thus, HARQ Rx may clear the soft buffer.

If HARQ Rx encounters no errors, HARQ Rx may send an ACK message to HARQ Tx indicating that HARQ PDUₙ₊₁ has been received. However, because HARQ Rx may have been expecting a retransmission of HARQ PDUₙ, HARQ Rx may also send an error indicator notifying HARQ Tx that an error has been detected. In addition, HARQ Rx may store a copy of the NDI value of HARQ PDUₙ₊₁ in a memory region associated with HARQ Rx.

Referring to FIG. 7b, using the same scenario as in FIG. 7a, HARQ Rx may send an error indicator in response to a detected error. However, in this embodiment, the error indicator may include two values, S and NDIₑ, as discussed above in connection with FIG. 5. In this example, because HARQ Rx was expecting a retransmission of data, but instead has determined, based on the NDI value, that new data has been received, the value of S may be equal to 0. The NDIₑ value may be set to the NDI value sent from HARQ Tx for HARQ PDUₙ₊₁. Thus, in this example, the NDIₑ value may be equal to 1.

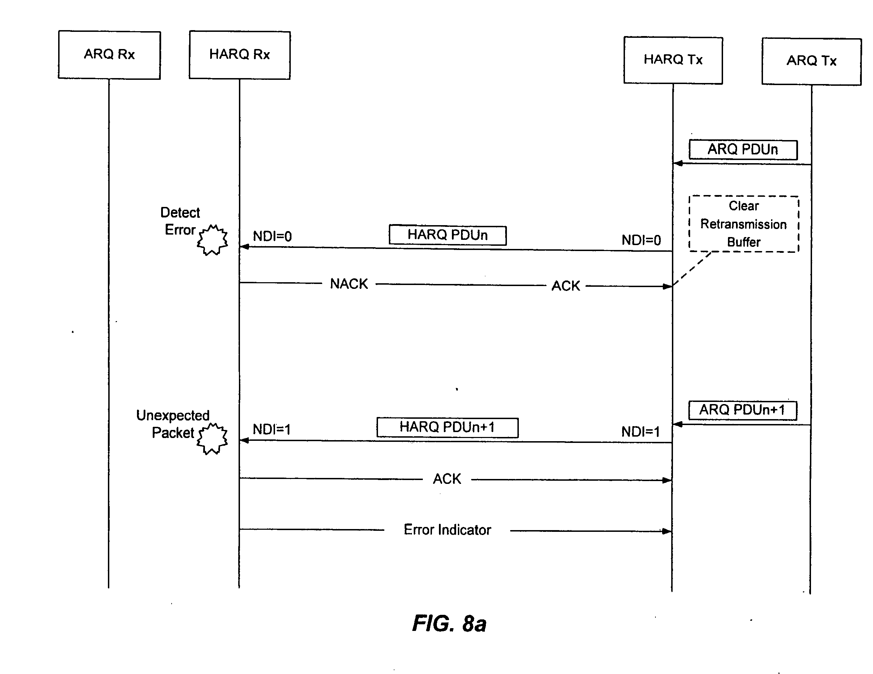

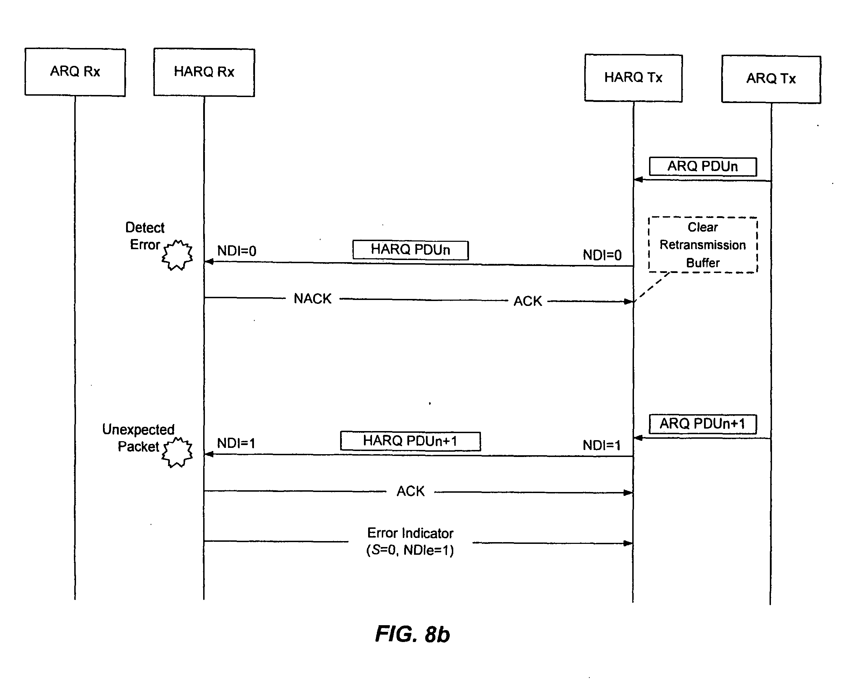

FIGS. 8a and 8b are exemplary signaling diagrams illustrating Type 6 error processing, consistent with certain embodiments. As discussed above, a Type 6 error may be an error when a NACK message is sent from HARQ Rx, but HARQ Tx receives an ACK message, i.e., a NACK→ACK error. The exemplary signaling diagrams of FIGS. 8a and 8b may be implemented in a UMTS communication system as discussed in connection with FIG. 1a.

For example, referring to FIG. 8a, ARQ Tx may process and send ARQ PDUₙ to a storage buffer. HARQ Tx may retrieve ARQ PDUₙ from the storage buffer and encode it, thereby generating HARQ PDUₙ. HARQ Tx may set an NDI value for HARQ PDUₙ, and then transmit HARQ PDUₙ to HARQ Rx. In this example, HARQ Tx may set NDI=0.

At the receiver, HARQ Rx may receive HARQ PDUₙ, and check its NDI value. As shown in FIG. 8a, HARQ Rx may determine the NDI value of the received HARQ PDUₙ is equal to 0, but may detect an error associated with HARQ PDUₙ. Thus, HARQ Rx may send a NACK message to HARQ Tx, indicating that the data has not been successfully received. In addition, HARQ Rx may store a copy of HARQ PDUₙ in a soft buffer associated with HARQ Rx, and may also separately store a copy of the NDI value of HARQ PDUₙ in a memory region associated with HARQ Rx.

However, as shown in FIG. 8a, rather than receiving the NACK message sent by HARQ Rx, HARQ Tx may instead receive an ACK message. Upon receiving the ACK message, HARQ Tx may clear HARQ PDUₙ from the retransmission buffer, and may prepare to send the next PDU, i.e., HARQ PDUₙ₊₁, to HARQ Rx. Because this is a new transmission of data, HARQ Tx may toggle the NDI value from 0 to 1. Once HARQ Tx sends HARQ PDUₙ₊₁ to HARQ Rx, HARQ Tx may store a copy of the transmitted data in the retransmission buffer.

At the receiver, HARQ Rx may receive the transmission of HARQ PDUₙ₊₁ and check its NDI value. HARQ Rx may determine that the NDI value of the received HARQ PDUₙ₊₁ is equal to 1. However, because HARQ Rx had previously sent a NACK message, HARQ Rx may not expect to receive new data, but instead may expect to receive a retransmission of HARQ PDUₙ. Once HARQ Rx determines that the NDI value has been toggled, HARQ Rx may clear HARQ PDUₙ from the soft buffer.

If HARQ Rx encounters no errors, HARQ Rx may send an ACK message indicating successful receipt of the data, but may also send an error indicator notifying HARQ Tx that an unexpected reception has been detected. In addition, HARQ Rx may store a copy of the NDI value of HARQ PDUₙ₊₁ in a memory region associated with HARQ Rx.

Referring to FIG. 8b, using the same scenario as in FIG. 8a, HARQ Rx may send an error indicator in response to a detected error. However, in this embodiment, the error indicator may include two values, S and NDIₑ, as discussed above in connection with FIG. 5. In this example, because HARQ Rx was expecting a retransmission of data, but instead has determined, based on the NDI value, that new data has been received, the value of S may be equal to 0. The NDIₑ value may be set to the NDI value sent from HARQ Tx for HARQ PDUₙ₊₁. Thus, in this example, the NDIₑ value may be equal to 1.

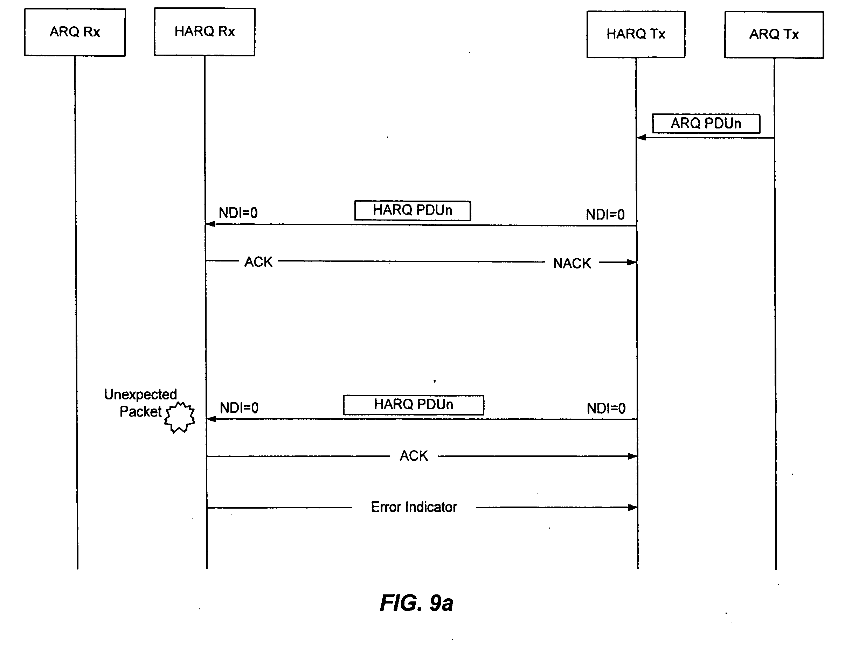

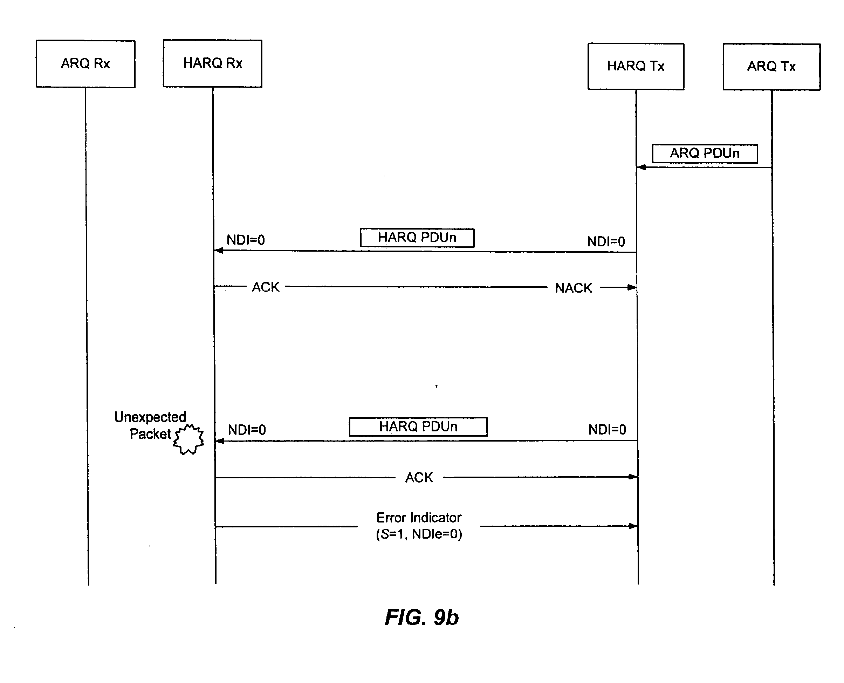

FIGS. 9a and 9b are exemplary signaling diagrams illustrating Type 7 error processing, consistent with certain embodiments. As discussed above, a Type 7 error may be an error when an ACK message is sent from HARQ Rx, but HARQ Tx receives a NACK message, i.e., an ACK→NACK error. The exemplary signaling diagrams of FIGS. 9a and 9b may be implemented in a UMTS communication system as discussed in connection with FIG. 1a.

For example, referring to FIG. 9a, ARQ Tx may process and send ARQ PDUₙ to a storage buffer. HARQ Tx may retrieve ARQ PDUₙ from the storage buffer and encode it, thereby generating HARQ PDUₙ. HARQ Tx may set an NDI value for HARQ PDUₙ, and then transmit HARQ PDUₙ to the receiver. In this example, HARQ Tx may set NDI=0.

At the receiver, HARQ Rx may receive HARQ PDUₙ, and check its NDI value. As shown in FIG. 9a, HARQ Rx may successfully receive HARQ PDUₙ, and may determine the NDI value of the received HARQ PDUₙ is equal to 0. Thus, HARQ Rx may send an ACK message to HARQ Tx, indicating that the data has been successfully received. In addition, HARQ Rx may store the NDI value for HARQ PDUₙ in a memory region associated with HARQ Rx.

However, as shown in FIG. 9a, rather than receiving the ACK message sent by HARQ Rx, HARQ Tx may instead receive a NACK message. Thus, HARQ Tx may retrieve HARQ PDUₙ from the retransmission buffer and retransmit HARQ PDUₙ to HARQ Rx. Because this is a retransmission of data, HARQ Tx may determine not to toggle the NDI value. Thus, the NDI value for the second transmission of HARQ PDUₙ may be the same as the NDI value of the initial transmission of HARQ PDUₙ.

At the receiver, HARQ Rx may receive the retransmission of HARQ PDUₙ and may check its NDI value. HARQ Rx may determine the NDI value of the received HARQ PDUₙ is equal to 0. However, because HARQ Rx has previously sent an ACK message, HARQ Rx may not expect to receive a retransmission of HARQ PDUₙ, but instead may expect to receive new data. Thus, If HARQ Rx encounters no errors, HARQ Rx may send an ACK message indicating successful receipt of the data, but may also send an error indicator notifying HARQ Tx that an unexpected reception has been detected. In addition, HARQ Rx may store a copy of the NDI value of HARQ PDUₙ in a memory region associated with HARQ Rx.

Referring to FIG. 9b, using the same scenario as in FIG. 9a, HARQ Rx may send an error indicator in response to a detected error. However, in this embodiment, the error indicator may include two values, S and NDIₑ, as discussed above in connection with FIG. 5. In this example, because HARQ Rx was expecting new data, but instead has determined, based on the NDI value, that a retransmission of HARQ PDUₙ has been received, the value of S may be equal to 1. The NDIₑ value may be set to the NDI value sent from HARQ Tx for HARQ PDUₙ. Thus, in this example, the NDIₑ value may be equal to 0.

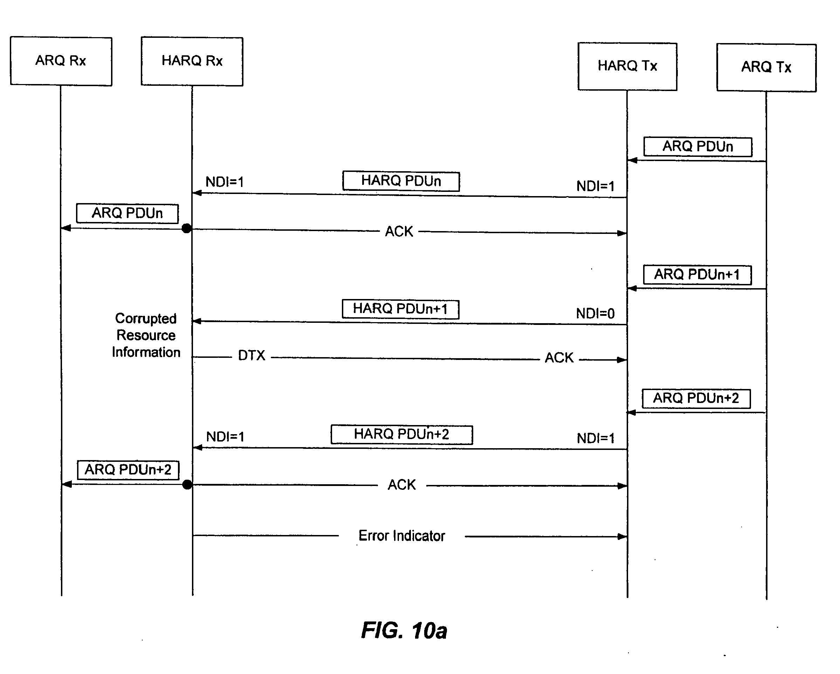

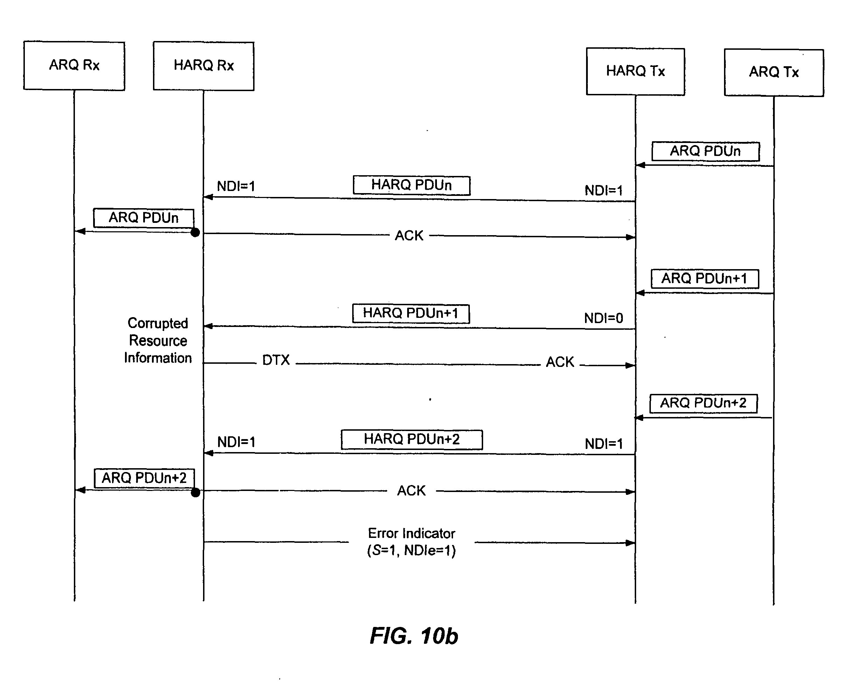

FIGS. 10a and 10b are exemplary signaling diagrams illustrating Type 3 error processing, consistent with certain embodiments. As discussed above, a Type 3 error may be an error in which a DTX is sent from the HARQ Rx mechanism but is interpreted by the HARQ Tx mechanism as an ACK, i.e., a DTX→ACK error. The exemplary signaling diagrams of FIGS. 10a and 10b may be implemented in a UMTS communication system as discussed in connection with FIG. 1a.

For example, referring to FIG. 10a, ARQ Tx may process and send ARQ PDUₙ to a storage buffer. HARQ Tx may retrieve ARQ PDUₙ from the storage buffer and encode it, thereby generating HARQ PDUₙ. HARQ Tx may set an NDI value for HARQ PDUₙ, and then transmit HARQ PDUₙ to the receiver. In this example, HARQ Tx may set NDI=1.. In addition, HARQ Tx may store a copy of HARQ PDUₙ in a retransmission buffer.

At the receiver, HARQ Rx may receive HARQ PDUₙ, and may check its NDI value. As shown in FIG. 10a, HARQ Rx may successfully receive HARQ PDUₙ and may determine the NDI value of the received HARQ PDUₙ is equal to 1. Thus, HARQ Rx may send an ACK message to HARQ Tx, indicating that the data has been successfully received, and forward the decoded HARQ PDUₙ (i.e., ARQ PDUₙ) to ARQ Rx. In addition, HARQ Rx may store a copy of the NDI value of HARQ PDUₙ in a memory region associated with HARQ Rx.

In response, HARQ Tx may encode ARQ PDUₙ₊₁, thereby generating HARQ PDUₙ₊₁. HARQ Tx may set an NDI value for HARQ PDUₙ₊₁, and then transmit HARQ PDUₙ₊₁ to the receiver. In this example, HARQ Tx may toggle NDI=0. Although not shown, HARQ Tx may clear HARQ PDUₙ from the retransmission buffer, storing HARQ PDUₙ₊₁ therein.

At the receiver, HARQ Rx may determine that the control information associated with HARQ PDUₙ₊₁ contains errors. In this example, the errors may be identified by the CRC check. In response, HARQ Rx may generate and send a DTX message to HARQ Tx. However, with this type of error, HARQ Tx may interpret the DTX message as an ACK message. Thus, HARQ Tx may prepare and send HARQ PDUₙ₊₂ to HARQ Rx. In this example, HARQ Tx may toggle NDI=1. Although not shown, HARQ Tx may store HARQ PDUₙ₊₂ in the retransmission buffer.

HARQ Rx may receive HARQ PDUₙ₊₂ and may check its NDI value. HARQ Rx may determine the NDI value of HARQ PDUₙ₊₂ is equal to 1, which is equal to the NDI value of the previously received HARQ PDUₙ. Thus, HARQ Rx may determine that the received HARQ PDU is a retransmission of PDUₙ. However, because HARQ Rx had previously sent a DTX message, HARQ Rx may not expect to receive a retransmission of HARQ PDUₙ, but instead may expect a new transmission of HARQ PDUₙ₊₁. If HARQ Rx encounters no errors, HARQ Rx may send an ACK message indicating successful receipt of the data, but may also send an error indicator notifying HARQ Tx that an unexpected reception has been detected. In addition, HARQ Rx may store the NDI value associated with HARQ PDUₙ₊₂ in a memory region associated with HARQ Rx.

Referring to FIG. 10b, using the same scenario as in FIG. 10b, HARQ Rx may send an error indicator in response to a detected error. However, in this embodiment, the error indicator may include two values, S and NDI, as discussed above in connection with FIG. 5. In this example, because HARQ Rx was expecting new data, but instead has determined that a retransmission of data has been received, the value of S may be equal to 1. The NDIₑ value may be set to the NDI value received by HARQ Rx for HARQ PDUₙ₊₂. Thus, in this example, the NDIₑ value may be equal to l.

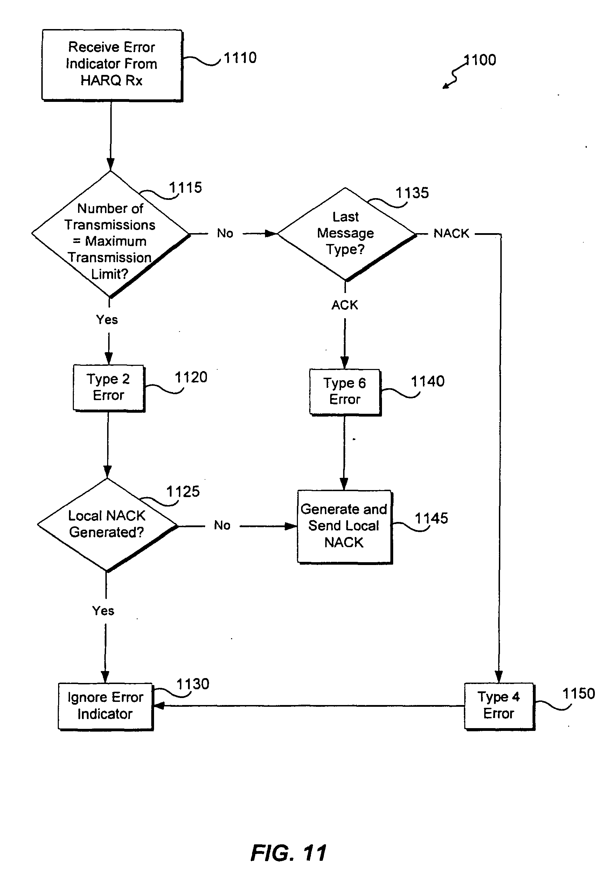

FIG. 11 illustrates an exemplary flow chart 1100 of a method for determining if an error is a Type 2 error (FIGS. 7a and 7b), a Type 4 error (FIGS. 6b and 6c), or a Type 6 error (FIGS. 8a and 8b), consistent with certain disclosed embodiments. The exemplary method of FIG. 11 may be implemented in a UMTS communication system as discussed in connection with FIG. 1a.

For example, referring to FIG. 11, once HARQ Tx receives an error indicator from HARQ Rx (step 1110), HARQ Tx may check if a maximum transmission limit has been reached (step 1115), as discussed above in connection with FIG. 7a and 7b. If the maximum transmission limit has been reached (step 1115, Yes), HARQ Tx may determine that the error indicator is for a Type 2 error (step 1120). HARQ Tx may then determine if a local NACK has already been generated (step 1125). If a local NACK has already been generated (step 1125, Yes), HARQ Tx may ignore the error indicator (step 1130). However, if a local NACK has not already been generated (step 1125, No), HARQ Tx may generate and send a local NACK (step 1145). The local NACK may be sent to ARQ Tx and may cause ARQ Tx to retransmit the lost packet data.

If HARQ Tx determines that a maximum transmission limit has not been reached (step 1115, No), HARQ Tx may check the type of the previously received ACK/NACK message (step 1135). If the previously received message was an ACK message (step 1135, ACK), HARQ Tx may determine that a Type 6 error has occurred (step 1140), and may generate and send a local NACK (step 1145). As discussed above, a Type 6 error may occur when HARQ Rx sends a NACK, but HARQ Tx receives an ACK.

If the previously was a NACK message (step 1135, NACK), HARQ Tx may determine that a Type 4 error has occurred (step 1150), and may ignore the error indicator (step 1130). As discussed above, a Type 4 error may occur when HARQ Rx misinterprets the NDI value sent from HARQ Tx.

In this manner, HARQ Tx may identify those error types that may not require ARQ Tx to retransmit packet data, i.e., Type 4, and those error types that may require ARQ Tx to retransmit data, i.e., Type 2 and Type 6. In addition, HARQ Tx may identify when an error requiring ARQ Tx to retransmit packet data has been previously acted upon, i.e., a Type 2 error for which a local NACK has been previously generated.

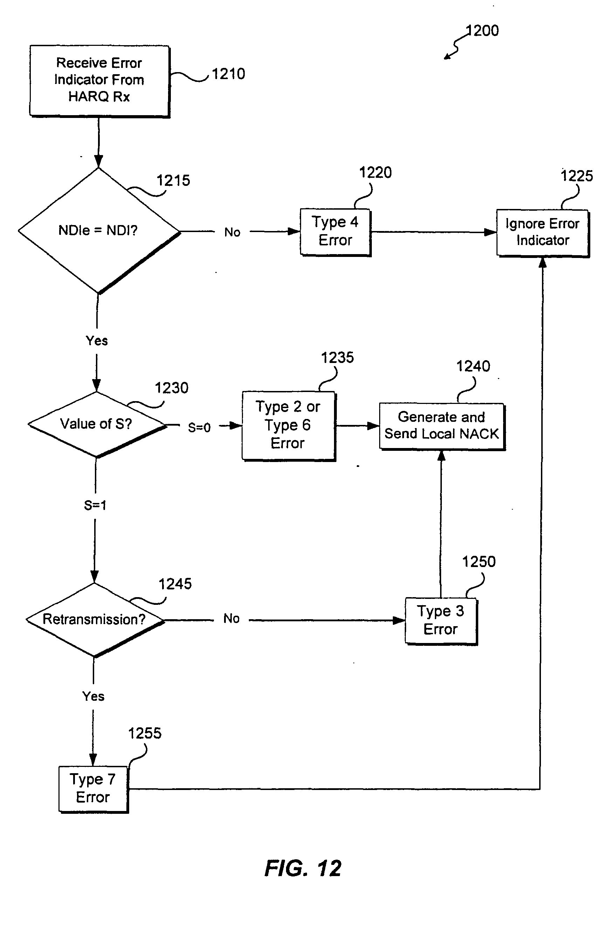

FIG. 12 illustrates an exemplary flow chart 1200 of a method for identifying Type 2, Type 3, Type 4, Type 6, and Type 7 errors, consistent with certain disclosed embodiments. For example, Type 2 errors (FIGS. 6b and 6c), Type 4 errors (FIGS. 7a and 7b), and Type 6 errors (FIGS. 8a and 8b) may be difficult to differentiate from one another. The exemplary method of FIG. 12 may be implemented in a UMTS communication system as discussed in connection with FIG. 1a.

For example, referring to FIG. 12, HARQ Tx may receive an error indicator from HARQ Rx (step 1210). In this flow chart, the error indicator may include NDIₑ and S values. Thus, HARQ Tx may check if the NDIₑ value of the received error indicator is equal to the NDI value of the previously transmitted packet data (step 1215). If NDIₑ is not equal to NDI (step 1215, No), HARQ Tx may determine that a Type 4 error has occurred (step 1220). As discussed above in connection with FIGS. 7a and 7b, a Type 4 error may occur when the NDI is misinterpreted. Because a Type 4 error may degrade system performance, but may not result in lost packet data, HARQ Tx may ignore the error indicator (step 1225).

If NDIₑ is equal to NDI (step 1215, Yes), HARQ Tx may check the value of S (step 1230). If the value of S=0, HARQ Tx may determine that either a Type 2 or a Type 6 error may have occurred (step 1235). As discussed above in connection with FIGS. 6b and 6c, a Type 2 error may occur when a maximum number of transmissions has been reached. As discussed above in connection with FIGS. 8a and 8b, a Type 6 error may occur when a NACK→ACK error occurs. Because both Type 2 and Type 6 errors may result in lost packet data, HARQ Tx may send a local NACK to ARQ Tx (step 1240).

If the value of S=1 (step 1230, S=1), HARQ Tx may check if the packet data previously sent from HARQ Tx was a retransmission or a transmission of new packet data (step 1245). As discussed above in connection with FIGS. 10a and 10b, S=1 may indicate that HARQ Rx was expecting to receive a transmission of new packet data. Thus, if NDIₑ =NDI and S=1, then HARQ Tx may check to see if the packet data sent to HARQ Rx was, in fact, new packet data, as HARQ Rx expected.

If HARQ Tx determines that the transmission was a retransmission (step 1245, Yes), HARQ Tx may determine that a Type 7 error has occurred (step 1255). As discussed above in connection with FIGS. 9a and 9b, a Type 7 error may occur when HARQ Rx sends an ACK but HARQ Tx receives a NACK, i.e., an ACK→NACK error. Because a Type 7 error may not result in lost packet data, HARQ Tx may ignore the error indicator (step 1225).

If HARQ Tx determines that the transmission was not a retransmission (step 1245, No), HARQ Tx may determine that a Type 3 error has occurred (step 1250). As discussed above in connection with FIGS. l0a and 10b, a Type 3 error may occur when HARQ Rx sends a DTX message but HARQ Tx receives an ACK message. Because a Type 3 error may result in lost packet data, HARQ Tx may generate and send a local NACK to ARQ Tx (step 1240).

The disclosed embodiments may be implemented within any network configuration utilizing W-CDMA technology, protocols, or standards. In this manner, the disclosed embodiments may enable the identification of those error types that may not require retransmission of data at higher layers, i.e., Type 4 and Type 7, and those error types that may require retransmission of data at higher layers, i.e., Type 2 and Type 6. By identifying those errors which may not result in data loss and thus may not require retransmission of packet data by higher layer mechanisms, the disclosed embodiments may achieve improved performance. In particular, the disclosed embodiments may reduce signal processing time and improve data traffic flow associated with error detection and retransmission of data in W-CDMA-based networks.

It will be apparent to those skilled in the art that various modifications and variations can be made in the system and method for reducing signal interference in communication networks. It is intended that the standard and examples be considered as exemplary only, with a true scope of the disclosed embodiments being indicated by the following claims and their equivalents.

## Claims

1. A method for identifying errors in a wireless communication system, comprising:
transmitting, by a transmitting device, data to a receiving device;
receiving, from the receiving device, a receipt message, wherein the receipt message is in response to the data sent to the receiving device;
receiving, from the receiving device, an error indicator, wherein the error indicator is associated with the data sent to the receiving device; and
determining an error type based on at least one of the receipt message and the error indicator.

2. The method as in claim 1, further including:
storing, by the transmitting device, a copy of the data sent to the receiving device.

3. The method as in claim 2, further including:
determining a number of transmissions associated with the data; and
determining if the number of transmissions is equal to or less than a maximum number of allowable transmissions associated with the data.

4. The method as in claim 3, further including:
determining, when the number of transmissions is equal to the maximum number of allowable transmissions, a predetermined error type; and
verifying, when the predetermined error type is determined, if a first local message has been transmitted.

5. The method as in claim 4, further including:
generating, when the first local message has not been transmitted, a second local message; and
sending the second local message, wherein the second local message causes the transmitting device to retransmit the data to the receiving device.

6. The method as in claim 3, further including:
determining, when the number of transmissions is less than the maximum number of allowable transmissions, a message type of the receipt message.

7. The method as in claim 6, further including:
determining, when the message type includes a NACK, a predetermined error type.

8. The method as in claim 7, wherein determining the predetermined error type further includes:
generating a local message; and
sending the local message, wherein the local message causes the transmitting device to retransmit the data to the receiving device.

9. The method as in claim 6, further including:
determining, when the message type includes an ACK, a predetermined error type.

10. The method as in claim 9, wherein determining the predetermined error type further includes:
determining to ignore the error indicator.

11. A method for identifying errors in a wireless communication system, comprising:
sending, by a transmitting device, data to a receiving device;
receiving, from the receiving device, a receipt message, wherein the receipt message is in response to the data sent to the receiving device;
receiving, from the receiving device, an error indicator, wherein the error indicator is associated with the data sent to the receiving device; and
determining an error type based on at least one of the receipt message and the error indicator, wherein the error indicator includes at least one of a new data indicator and an expected data value.

12. The method as in claim 11, wherein the new data indicator is a first new data indicator, the method further including:
comparing the first new data indicator with a second new data indicator.

13. The method as in claim 12, further including:
determining, when the first new data indicator is not equal to the second new data indicator, a predetermined error type.

14. The method as in claim 13, wherein determining the predetermined error type further includes:
determining to ignore the error indicator.

15. The method as in claim 12, further including:
determining, when the first new data indicator is equal to the second new data indicator, a value associated with the expected data value.

16. The method as in claim 15, further including:
generating, when the value is equal to a first value, a local message; and
sending the local message, wherein the local message causes the transmitting device to retransmit the data.

17. The method as in claim 15, further including:
determining, when the value is equal to a second value, if the data associated with the error indicator was transmitted more than one time.

18. The method as in claim 17, further including:
determining, when the data associated with the error indicator was not transmitted more than one time, a predetermined error type.

19. The method as in claim 18, wherein determining the predetermined error type further includes:
generating a local message; and
sending the local message, wherein the local message causes the transmitting device to retransmit the data.

20. The method as in claim 17, further including:
determining, when the data associated with the error indicator was transmitted more than one time, a predetermined error type.

21. The method as in claim 20, wherein determining the predetermined error type further includes:
generating a local message, and
sending the local message, wherein the local message causes the transmitting device to retransmit the data.

22. A method for identifying errors in a wireless communication system, comprising:
receiving data from a transmitting device, wherein the data includes a new data indicator;
sending, to the transmitting device, a receipt message, wherein the receipt message is in response to the data;
determining, by a receiving device, if there is at least one error associated with the data; and
sending, when the at least one error is determined, an error indicator to the transmitting device, wherein the error indicator includes at least one of a new data indicator and an expected data value.

23. The method as in claim 22, wherein the new data indicator is a first new data indicator, the method further including:
determining a second new data indicator, wherein the second new data indicator is received from the transmitting device.

24. The method as in claim 23, further including:
setting the first new data indicator equal to the second new data indicator.

25. The method as in claim 22, further including:
determining, by the receiving device, if new data was expected;
setting, when it is determined that new data was expected, the expected data value to a first value; and
setting, when it is determined that new data was not expected, the expected data value to a second value.

26. The method as in claim 25, wherein the determining further includes:
comparing the first new data indicator with a third new data indicator, wherein the third data indicator is associated with a previously received data;
setting, when the first new data indicator is not equal to the third new data indicator, the expected data value to the first data value; and
setting, when the first new data indicator is equal to the third new data indicator, the expected data value to the second value.

27. The method as in claim 25, wherein the first value and the second value are boolean values.

28. A wireless communication station for wireless communication, the wireless communication station comprising:
at least one memory to store data and instructions; and
at least one processor configured to access the memory and configured to, when executing the instructions:
send transmission data to a receiving device;
receive, from the receiving device, a receipt message, wherein the receipt message is in response to the transmission data;
receive, from the receiving device, an error indicator, wherein the error indicator is associated with the transmission data; and
determine an error type based on at least one of the receipt message and the error indicator.

29. The wireless communication station as in claim 28, wherein the at least one processor is further configured to:
store a copy of the transmission data in the memory.

30. The wireless communication station as in claim 29, wherein the at least one processor is further configured to:
determine a number of transmissions associated with the transmission data; and
determine if the number of transmissions is equal to or less than a maximum number of allowable transmissions associated with the transmission data.

31. The wireless communication station as in claim 30, wherein the at least one processor is further configured to:
determine, when the number of transmissions is equal to the maximum number of allowable transmissions, a predetermined error type; and
verify, when the predetermined error type is determined, if a first local message has been transmitted.

32. The wireless communication station as in claim 31, wherein the at least one processor is further configured to:
generate, when the first local message has not been transmitted, a second local message; and
send the second local message, wherein the second local message causes the transmitting device to resend the transmission data.

33. The wireless communication station as in claim 30, wherein the at least one processor is further configured to:
determine, when the number of transmissions is less than the maximum number of allowable transmissions, a message type of the receipt message.

34. The wireless communication station as in claim 33, wherein the at least one processor is further configured to:
determine, when the message type includes a NACK, a predetermined error type.

35. The wireless communication station as in claim 34, wherein to determine the predetermined error type, the at least one processor is further configured to:
generate a local message; and
send the local message, wherein the local message causes the transmitting device to resend the transmission data.

36. The wireless communication station as in claim 33, wherein the at least one processor is further configured to:
determine, when the message type includes an ACK, a predetermined error type.

37. The wireless communication station as in claim 36, wherein to determine the predetermined error type, the at least one processor is further configured to:
determine to ignore the error indicator.

38. A wireless communication station for wireless communication, the wireless communication station comprising:
at least one memory to store data and instructions; and
at least one processor configured to access the memory and configured to, when executing the instructions:
send transmission data to a receiving device;
receive, from the receiving device, a receipt message, wherein the receipt message is in response to the transmission data;
receive, from the receiving device, an error indicator, wherein the error indicator is associated with the transmission data; and
determine an error type based on at least one of the receipt message and the error indicator, wherein the error indicator includes at least one of a new data indicator and an expected data value.

39. The wireless communication station as in claim 38, wherein the new data indicator is a first new data indicator, the at least one processor further configured to:
compare the first new data indicator with a second new data indicator.

40. The wireless communication station as in claim 39, wherein the at least one processor is further configured to:
determine, when the first new data indicator is not equal to the second new data indicator, a predetermined error type.

41. The wireless communication station as in claim 40, wherein to determine the predetermined error type, the at least one processor is further configured to:
determine to ignore the error indicator.

42. The wireless communication station as in claim 39, wherein the at least one processor is further configured to:
determine, when the first new data indicator is equal to the second new data indicator, a value associated with the expected data indicator.

43. The wireless communication station as in claim 42, wherein the at least one processor is further configured to:
generate, when the value is equal to a first value, a local message; and
send the local message, wherein the local message causes the transmitting device to retransmit the transmission data.

44. The wireless communication station as in claim 42, wherein the at least one processor is further configured to:
determine, when the value is equal to a first value, if the transmission data associated with the error indicator was transmitted more than one time.

45. The wireless communication station as in claim 44, wherein the at least one processor is further configured to:
determine, when the transmission data associated with the error indicator was not transmitted more than one time, a predetermined error type.

46. The wireless communication station as in claim 45, wherein to determine the predetermined error type, the at least one processor is further configured to:
generate a local message; and
send the local message, wherein the local message causes the transmitting device to retransmit the transmission data.

47. The wireless communication station as in claim 44, wherein the at least one processor is further configured to:
determine, when the transmission data associated with the error indicator was transmitted more than one time, a predetermined error type.

48. The wireless communication station as in claim 47, wherein to determine the predetermined error type, the at least one processor is further configured to:
generate a local message, and
send the local message, wherein the local message causes the transmitting device to retransmit the transmission data.

49. A wireless communication device for wireless communication, the wireless communication device comprising:
at least one memory to store data and instructions; and
at least one processor configured to access the memory and configured to, when executing the instructions:
receive transmission data from a transmitting device, wherein the transmission data includes a new data indicator;
send, to the transmitting device, a receipt message, wherein the receipt message is in response to the transmission data;
determine if there is at least one error associated with the transmission data; and
send, when the at least one error is determined, an error indicator to the transmitting device, wherein the error indicator includes at least one of a new data indicator and an expected data value.

50. The wireless communication device as in claim 49, wherein the new data indicator is a first new data indicator, the at least one processor further configured to:
set the first new data indicator equal to a second new data indicator, wherein the second new data indicator is received from the transmitting device.

51. The wireless communication device as in claim 50, wherein the at least one processor further configured to:
determine, by the receiving device, if new data was expected;
set, when it is determined that new data was expected, the expected data value to a first value; and
set, when it is determined that new data was not expected, the expected data value to a second value.

52. The wireless communication device as in claim 50, wherein to determine, the at least one processor is further configured to:
compare the first new data indicator with a third new data indicator, wherein the third data indicator is associated with a previously received data;
set, when the first new data indicator is not equal to the third new data indicator, the expected data value to a first data value; and
set, when the first new data indicator is equal to the third new data indicator, the expected data value to a second value.

53. The wireless communication device as in claim 51, wherein the first value and the second value are boolean values.

54. The wireless communication device as in claim 52, wherein the first value and the second value are boolean values.
